# EUROPÄISCHE PATENTSCHRIFT

(11) **EP 3 559 486 B1**
(45) Veröffentlichungstag und Bekanntmachung des Hinweises auf die Patenterteilung: **15.06.2022**
(21) Anmeldenummer: 17804120.8
(22) Anmeldetag: 14.11.2017
(51) Int. Cl.: F16B 37/04, F16B 37/12, F16B 39/282, F16B 33/00, B29C 65/48, B29C 65/78, F16B 43/00, B29C 37/00, B29C 45/00, B29C 65/06, B29C 65/08, B29C 65/14, B29C 65/44, B29C 65/46, B29C 65/00, B29C 70/48, B29C 70/68, B29C 45/16

(54) **BEFESTIGUNGSEINLEGER FÜR EIN BAUTEIL AUS KUNSTSTOFF-, SCHAUM- ODER VERBUNDMATERIAL**
FASTENING INSERT FOR A COMPONENT MADE OF PLASTIC, FOAM OR COMPOSITE MATERIAL
INSERT DE FIXATION POUR UN ÉLÉMENT EN MATIÈRE PLASTIQUE, EN MOUSSE OU EN MATÉRIAU COMPOSITE

(30) Priorität: 23.12.2016 DE 102016125660
(43) Veröffentlichungstag der Anmeldung: 30.10.2019
(73) Patentinhaber: Böllhoff Verbindungstechnik GmbH, 33649 Bielefeld (DE)
(72) Erfinder: STUMPF, Michael, 33611 Bielefeld (DE)
(74) Vertreter: HWP Intellectual Property
(86) Internationale Anmeldenummer: PCT/EP2017/079143
(87) Internationale Veröffentlichungsnummer: WO 2018/114144

(56) Entgegenhaltungen:
- EP-A1- 2 520 419
- EP-A1- 2 851 570
- EP-A1- 3 072 626
- EP-A2- 1 772 635
- WO-A1-96/00142
- WO-A1-2005/023526
- WO-A1-2007/109855
- WO-A1-2011/152732
- WO-A1-2014/124841
- DE-A1- 4 016 427
- DE-A1-102005 013 154
- DE-A1-102012 210 597
- DE-A1-102013 100 849
- DE-A1-102014 009 446
- FR-A5- 2 232 957
- GB-A- 2 015 414
- US-A- 2 744 043
- US-A- 5 181 767
- US-B1- 6 554 939

## Beschreibung

### 1. Gebiet der Erfindung

Die vorliegende Erfindung betrifft einen Befestigungseinleger aus Kunststoff mit einer T-förmigen Konfiguration, der bei der Herstellung eines Bauteils aus Kunststoff- oder Schaummaterial oder aus einem Verbundmaterial in das Materialvolumen eingelegt und durch Aushärtung des Materials darin befestigt wird. Des Weiteren betrifft vorliegende Erfindung ein Bauteil hergestellt aus einem Kunststoff- oder Schaummaterial oder einem Verbundmaterial, in dem ein derartiger Befestigungseinleger angeordnet ist. Zudem umfasst vorliegende Erfindung eine Verbindung aus mindestens einem ersten und einem zweiten Bauteil, wobei zumindest das erste Bauteil den oben genannten Befestigungseinleger enthält. Des Weiteren ist vorliegende Erfindung auf ein Herstellungsverfahren für den oben genannten T-förmigen Befestigungseinleger aus Kunststoff sowie auf ein Herstellungsverfahren eines entsprechenden Bauteils mit diesem Befestigungseinleger gerichtet.

### 2. Hintergrund der Erfindung

Im Stand der Technik werden Bauteile aus faserverstärkten Materialien mit Befestigungselementen ausgestattet, um weitere Bauteile oder Anbauteile mit ihnen verbinden zu können. Gemäß einer anerkannten Vorgehensweise werden die Befestigungselemente auf die Bauteiloberfläche aufgeklebt, wie es in US 4,842,912 beschrieben ist. Derartige Verbindungen haben häufig den Nachteil, dass die nur einseitig am Befestigungselement angreifenden Haltekräfte den Belastungen der Verbindung nicht standhalten können.

FR 3 013 253 beschreibt weiterführend ein Befestigungselement, welches aus einem tellerartigen Drahtgeflecht besteht. In dem tellerartigen Drahtgeflecht ist zentral eine Blindnietmutter angeordnet, um eine Verbindung mit einem Gewindeelement herzustellen. Das tellerartige Drahtgeflecht wird bei der Bauteilherstellung in ein Bauteilmaterial eingegossen. Durch die Öffnungen im tellerartigen Drahtgeflecht findet eine Durchströmung des Drahtgeflechts statt, was für eine entsprechende Befestigung im Bauteil sorgt. Da dieser Befestiger aus Metall besteht, ergeben sich gerade bei der Nutzung in Kombination mit kohlefaserverstärkten Materialien ungünstige elektrochemische Potentiale. Diese führen zu elektrochemischer Korrosion und einer Schwächung der Verbindung.

GB 1 530 613 beschreibt einen Befestigungseinleger, der ebenfalls eine T-förmige Konfiguration aufweist. Der Teller des Befestigungseinlegers hat einseitig oder beidseitig vorstehende Stifte, die in angrenzende Gewebematten eingreifen. Die Stifte sind kreisförmig um eine zentrale Befestigungsöffnung angeordnet und bieten dadurch eine drehfeste Anordnung des Befestigungseinlegers zwischen den Gewebematten. Da der Teller eine durchgehende Fläche definiert, ist in diesem Flächenbereich keine stoffschlüssige Verbindung zwischen benachbarten und durch den Teller voneinander getrennten Materiallagen möglich. Dies schwächt neben der Anordnung des Befestigungseinlegers auch den gesamten Materialverbund des Bauteils.

Aus WO 2014/124841 A ist ein Reibschweißverfahren zum Befestigen einer Verbindungsbuchse, wie beispielsweise einer Gewindebuchse, in einem Gehäuse bekannt. Um die Qualität der Verbindung zu verbessern, wird die Verbindungsbuchse mit Hilfe eines Reibschweißelements am Gehäuse befestigt. Das Reibschweißelement besteht aus der Verbindungsbuchse, an die ein Reibschweißmantel mit radial außen liegender Reibschweißkontur angeformt ist. Über eine spezielle Ausgestaltung der Reibschweißkontur entstehen Verbindungs- und Dichtbereiche zwischen dem Reibschweißelement und dem Gehäuse während des Reibschweißens.

Des Weiteren sind im Stand der Technik Befestigungseinleger bekannt, die in ihrer T-förmigen Konfiguration einen oder zwei gelochte Teller aufweisen. Die Löcher in den Tellern sorgen für eine ausreichende Umströmung des Befestigungseinlegers, beispielsweise bei einem Harz-Injektionsverfahren (Resin Transfer Molding, RTM). Gleichzeitig lassen sich diese Befestigungseinleger aber nur ungenau auf und zwischen Gewebematten oder Materiallagen positionieren, weil jegliche Positionsfixierung fehlt. Des Weiteren ist von Nachteil, dass ein Befestigungseinleger aus Metall elektrochemische Korrosion gerade in Kombination mit Kohlefaserverstärkungen unterstützt. Lediglich die Herstellung des Befestigungseinlegers aus Edelstahl würde die Korrosion verhindern, was aber zu zusätzlichen Material- und Herstellungskosten führt.

Es ist somit die Aufgabe vorliegender Erfindung, einen Befestigungseinleger bereitzustellen, der sich verlässlich im Material eines Bauteils verankern lässt und darüber eine Verbindung hoher Lebensdauer bereitstellt. Des Weiteren ist es Aufgabe vorliegender Erfindung, mithilfe des Befestigungseinlegers eine Verbindungsmöglichkeit mit weiteren Verbindungselementen oder Anbauteilen bereitzustellen, die eine verlässliche und belastbare Verbindung gewährleistet und das Risiko elektrochemischer Korrosion verringert.

### 3. Zusammenfassung der Erfindung

Die obige Aufgabe wird durch einen Befestigungseinleger gemäß dem unabhängigen Patentanspruch 1, durch ein Bauteil mit diesem Befestigungseinleger gemäß dem unabhängigen Patentanspruch 10, durch eine Verbindung zwischen einem ersten und einem zweiten Bauteil, wobei das erste Bauteil den Befestigungseinleger aufweist, gemäß dem unabhängigen Patentanspruch 11, durch ein Herstellungsverfahren für den T-förmigen Befestigungseinleger gemäß dem unabhängigen Patentanspruch 12, durch ein alternatives Herstellungsverfahren für den T-förmigen Befestigungseinleger gemäß dem unabhängigen Patentanspruch 16 sowie durch ein Herstellungsverfahren für ein Bauteil mit einem T-förmigen Befestigungseinleger gemäß dem unabhängigen Patentanspruch 18 gelöst. Weitere Ausgestaltungen und vorteilhafte Weiterentwicklungen der vorliegenden Erfindung gehen aus der folgenden Beschreibung, den begleitenden Zeichnungen und den anhängenden Ansprüchen hervor.

Der erfindungsgemäße Befestigungseinleger besteht aus Kunststoff und weist eine T-förmige Konfiguration auf. Zudem besteht der Befestigungseinleger aus einer Einlegescheibe und einem an der Einlegescheibe über einen Befestigungsabschnitt fest angeordneten und über diese einseitig oder beidseitig mit einem Funktionsabschnitt vorstehenden Schaft, von denen zumindest die Einlegescheibe in einem Schaummaterial, einem Kunststoffmaterial oder einem Verbundmaterial während einer Bauteilherstellung positionierbar und durch die Bauteilherstellung darin befestigbar ist, in dem die Einlegescheibe aufweist: zwei einander gegenüberliegend angeordnete Befestigungsseiten, die jeweils zumindest teilweise eine Anlagefläche für angrenzende Materiallagen bilden, mehrere außermittig um den Schaft angeordnete Durchgangsöffnungen, die die Befestigungsseiten miteinander verbinden und von denen mindestens eine Durchgangsöffnung einen vollständig umlaufenden oder einen abschnittsweise umlaufenden Randvorsprung aufweist, der als Verzahnung ausgebildet ist und sich einseitig oder beidseitig über die jeweilige Befestigungsseite der Einlegescheibe hinaus erstreckt.

Der Befestigungseinleger aus Kunststoff ist speziell für Bauteile aus Schaummaterial, Kunststoff oder für Bauteile aus einem Verbundmaterial konzipiert. In diesem Zusammenhang besteht ein Verbundmaterial aus zwei oder mehreren verbundenen Werkstoffen. Dadurch weist das Verbundmaterial andere Eigenschaften auf als seine Werkstoffkomponenten. Beispiele für die Verbundmaterialien sind Faserverbundwerkstoffe. Diese können lange oder kurze Verstärkungsfasern aufweisen. Ein weiteres Beispiel sind Schichtverbundwerkstoffe, die auch als Laminate bezeichnet werden. Häufig werden auch schichtweise hergestellte Faserverbundwerkstoffe als Laminate bezeichnet. Vorliegend werden unter Verbundmaterialien bevorzugt Faser-Kunststoff-Verbunde verstanden. Diese umfassen kohlenstofffaserverstärkte Kunststoffe (CFK), glasfaserverstärkte Kunststoff (GFK), aramidfaserverstärkte Kunststoffe (AFK) und naturfaserverstärkte Kunststoffe (NFK). Bauteile mit vorteilhaften mechanischen Eigenschaften bestehen aus CFK. Die in der Kunststoffmatrix eingesetzten Kohlenstofffasern können unterschiedliche Längen und Konfigurationen aufweisen.

Der Befestigungseinleger vorliegender Erfindung wird bevorzugt in CFK-Bauteilen eingesetzt. Die CFK-Bauteile werden aus bekannten Faser-Matrix-Halbzeugen hergestellt. Unter einem Faser-Matrix-Halbzeug versteht man ein Halbzeug aus einer Kohlenstoffverstärkungsfaser, die mit einer Kunststoffmatrix getränkt ist. Bekannte Beispiele für derartige Halbzeuge sind Prepregs. Dieses Halbzeug besteht aus Endlosfasern, die in einer Kunststoffmatrix getränkt sind. Die Fasern formen entweder eine unidirektionale Schicht oder sie liegen als Gewebe oder Gelege vor. Weitere Faser-Matrix-Halbzeuge für CFK-Bauteile sind SMC (Sheet Molding Compound) und BMC (Bulk Molding Compound). SMC sind meistens plattenförmig und werden in einer Pressform verarbeitet. Dabei können Befestigungseinleger in die Pressform eingelegt und verarbeitet werden. BMC ist eine formlose Masse, die mithilfe der bekannten Heißpresstechnik als Pressmasse verarbeitet wird. Weiterhin lassen sich die BMC mit der Spritzgusstechnik verarbeiten. Dabei sind die Verstärkungsfasern so kurz, dass sie beim Pressen oder Spritzen mit dem Reaktionsharz durch die Form fließen können. Weiterhin werden als Verbundmaterial kohlenstofffaserhaltige Organobleche angesehen, die mittels Hybridmolding verarbeitet werden. Des Weiteren zählen Gewebe, Vliese und Filze dazu, die in einer Harzmatrix verarbeitet werden. Außerdem werden Bauteile bevorzugt aus Struktur- und/oder Integralschaum mit einem verstärkenden Kohlenstofffaseranteil hergestellt. Vereinfacht ist es ebenfalls bevorzugt, ein Bauteil strukturiert aus mehreren Kunststoffschichten aufzubauen und den Befestigungseinleger zwischen diesen Schichten anzuordnen.

Der erfindungsgemäße Befestigungseinleger erhält seine T-förmige Konfiguration durch die Kombination der Einlegescheibe und des Schaftes. Dabei ist die Einlegescheibe funktional hauptsächlich für die Befestigung des Befestigungseinlegers in dem Schaummaterial, dem Kunststoff oder dem Verbundmaterial des Bauteils verantwortlich. Der Schaft wiederum bildet mit seinem Befestigungsabschnitt eine verlässliche mechanische Kopplung an die Einlegescheibe. Auf diese Weise ist der Schaft fest mit der Einlegescheibe verbunden. Zudem stellt der Schaft mit seinem Funktionsabschnitt eine Befestigungsmöglichkeit mit dem Befestigungseinleger und somit mit dem Bauteil bereit, in dem der Befestigungseinleger angeordnet ist.

Die Einlegescheibe des erfindungsgemäßen Befestigungseinlegers zeichnet sich durch eine durchbrochene Struktur aus. Diese durchbrochene Struktur wird bevorzugt durch mehrere Durchgangsöffnungen gebildet. Da diese Durchgangsöffnungen jeweils eine Verbindung zu den beiden aneinander gegenüberliegend angeordneten Befestigungsseiten bilden, kann beispielsweise ein tränkendes Harzmaterial oder ein Faser-Matrix-Halbzeug diese Durchgangsöffnungen durchfließen und in ihnen aushärten.

Um sowohl bei der Vorbereitung der Herstellung eines Bauteils als auch später im Bauteil eine mechanische Positionssicherung für den Befestigungseinleger bereitstellen zu können, weist mindestens eine Durchgangsöffnung eine zumindest einseitig vorstehende Verzahnung auf. Diese Verzahnung greift in das an der entsprechenden Befestigungsseite der Einlegescheibe angreifende Material des späteren Bauteils ein, sodass vorzugsweise eine formschlüssige Verbindung gebildet wird. Die hier über die Befestigungsseite vorstehende Verzahnung ist entweder vollständig umlaufend oder abschnittsweise umlaufend um die jeweilige Durchgangsöffnung ausgebildet. Gerade wenn der bevorzugte Befestigungseinleger auf einer Gewebematte, einer Lage aus Verstärkungsfasern, vorzugsweise Kohlenstofffasern, einer Kunststoffschicht oder einem Laminat angeordnet wird, dann sorgt die in die Fasern und die benachbarte Materiallage eingreifende Verzahnung für einen positionsgenauen Halt des Befestigungseinlegers, beispielsweise in einer Form zur Bauteilherstellung. Vorzugsweise weist mindestens eine Durchgangsöffnung an beiden einander gegenüberliegend angeordneten Befestigungsseiten jeweils eine vorstehende Verzahnung auf. Diese wirkt sich besonders dann vorteilhaft aus, wenn der Befestigungseinleger und im Speziellen die Einlegescheibe zwischen zwei Materiallagen oder Gewebematten oder faserverstärkten Laminaten oder ähnlichen Werkstoffschichten angeordnet wird. Denn die beidseitig vorstehenden Verzahnungen sorgen für einen sicheren Halt und somit für eine positionsgenaue Anordnung des Befestigungseinlegers, beispielsweise in einer Form zur Bauteilherstellung.

Gemäß einer bevorzugten Ausführungsform vorliegender Erfindung weist die Einlegescheibe zumindest einen umlaufenden ringartigen radialen Außenbereich auf, in dem eine Mehrzahl der Durchgangsöffnungen gleichmäßig beabstandet zueinander angeordnet ist, wobei die Durchgangsöffnungen kreisförmig und/oder als Langloch ausgebildet sind.

Vorzugsweise ist die Einlegescheibe aufgrund ihrer Konfiguration in unterschiedliche funktionelle Bereiche unterteilt. Die in einem ringartigen radialen Außenbereich angeordneten Öffnungen dienen unter anderem der festen Anordnung des Befestigungseinlegers im späteren Schaummaterial, Kunststoffmaterial oder Verbundmaterial. Denn diese Durchgangsöffnungen sind dafür ausgelegt, dass sie durch ein tränkendes Harz, das Kunststoffmaterial oder das Verbundmaterial selbst durchströmt werden. Auf diese Weise wird gewährleistet, dass die an gegenüberliegenden Befestigungsseiten der Einlegescheibe angeordneten Materiallagen miteinander verbunden werden. Des Weiteren dienen diese Durchgangsöffnungen im radialen Außenbereich dazu, den Befestigungseinleger bevorzugt mit einer Gewebematte, einem Vlies, einem Filz oder einer anderen Materiallage zu vernähen. Somit hilft einerseits die Verzahnung bei der Realisierung einer Positionierung genauso wie ein Vernähen des Befestigungseinlegers.

Gemäß einer weiteren bevorzugten Ausführungsform vorliegender Erfindung ist der Schaft des Befestigungseinlegers zylindrisch oder hohlzylindrisch konfiguriert. Des Weiteren sind eine erste Mehrzahl an Durchgangsöffnungen im Außenbereich bogenförmige Langlöcher, deren Verzahnung sich beidseitig über die Befestigungsseiten der Einlegescheibe hinaus erstreckt.

Die bevorzugte beidseitige Verzahnung der mehreren Durchgangsöffnungen im Außenbereich unterstützt eine verlässliche mechanische Anbindung des Befestigungseinlegers, im Speziellen der Einlegescheibe, an die angrenzenden Materialbereiche des Verbundmaterials, des Kunststoffmaterials und des Schaummaterials. Durch die bevorzugte Verzahnung im radialen Außenbereich wird zudem gewährleistet, dass der Befestigungseinleger einer Drehmomentbelastung einen hohen Ausdrehwiderstand entgegensetzt. Denn mit der auf der Einlegescheibe radial außen angeordneten Verzahnung wird über die Einlegescheibe ein relativ großer Hebelarm für den Befestigungseinleger erzeugt, mit dem sich dieser gegen ein äußeres Drehmoment im Bauteilmaterial festhält. Zudem wird vorzugsweise die Verzahnung im Randbereich bogenförmig verlaufender Langlöcher angeordnet. Damit erstreckt sich die Verzahnung nicht nur über einen punktuell ausgebildeten Bereich. Auch die durchströmten Bereiche der Langlöcher stellen eher einen Haltesteg als einen Haltepunkt bereit, der sich mechanisch mit der Verzahnung zum Halt des Befestigungseinlegers ergänzt.

Gemäß einer weiteren bevorzugten Ausführungsform des erfindungsgenmäßen Befestigungseinlegers ist der ringartige radiale Außenbereich der Einlegescheibe in einer Ebene angeordnet und umgibt einen gewölbt ausgebildeten Zentralbereich, der aus dieser Ebene heraus in Richtung Funktionsabschnitt des Schafts gewölbt ist, wobei eine konkave Vertiefung des Zentralbereichs einen zumindest ringförmigen radialen Freiraum definiert, der radial auswärts bezogen auf eine Schaftaußenfläche angeordnet ist.

Die erfindungsgemäße Konfiguration der Einlegescheibe definiert bevorzugt einen zusätzlichen Befestigungsbereich mithilfe des gewölbt ausgebildeten Zentralbereichs. Denn dieser Bereich ist dafür vorgesehen, eine bestimmte Klebstoffmenge aufzunehmen, mit der eine Vorfixierung des Befestigungseinlegers auf einer Materialschicht während der Bauteilherstellung vorgenommen werden kann. Denn mithilfe dieses gewölbt ausgebildeten Zentralbereichs wird gewährleistet, dass der Klebstoff lediglich in der vorgesehenen konkaven Vertiefung des Zentralbereichs angeordnet ist. Trotz eines Andrückens des Befestigungseinlegers an benachbarte Materiallagen/ -schichten dringt vorzugsweise der Klebstoff nicht aus diesem konkaven Zentralbereich, sodass durch den Klebstoff auch nicht Durchgangsöffnungen im radialen Außenbereich blockiert werden. Somit stellt die bevorzugte gewölbte Konfiguration der Einlegescheibe eine zusätzliche Anordnungsmöglichkeit des Befestigungseinlegers bereit, ohne das die spätere mechanische Integrität des Befestigungseinlegers dadurch in Mitleidenschaft gezogen wird.

Gemäß einer weiteren bevorzugten Ausführungsform vorliegender Erfindung ist eine zweite Mehrzahl an Durchgangsöffnungen im gewölbten Zentralbereich des Befestigungseinlegers gleichmäßig beabstandet zueinander angeordnet, die kreisförmig und/oder als Langloch ausgebildet sind. Weiterhin bevorzugt weist die erste Mehrzahl der Durchgangsöffnungen und die zweite Mehrzahl der Durchgangsöffnungen jeweils eine einseitig überstehende Verzahnung auf, die aneinander entgegengesetzt ausgerichtet ist.

Erfindungsgemäß bevorzugt sind sowohl im gewölbten Zentralbereich wie auch im radialen Außenbereich jeweils mehrere Durchgangsöffnungen angeordnet. Unabhängig davon, ob diese Durchgangsöffnungen kreisförmig oder bogenförmig als Langlöcher ausgebildet sind, weisen sie eine einander entgegengesetzte Verzahnung auf. Somit ragt vorzugsweise die Verzahnung der im gewölbten Bereich angeordneten Durchgangsöffnungen in das Wölbungsvolumen hinein. Auf diese Weise stellt diese Verzahnung sicher, dass sich die Einlegescheibe zusätzlich mit dieser Verzahnung in dem aushärtenden Klebstoff verankert. Die im Außenbereich vorstehende Verzahnung gewährleistet eine Verankerung der Einlegescheibe in einer Materiallage, die über dem Befestigungseinleger positioniert wird. Dabei versteht sich, dass der Schaft des Befestigungseinlegers jeweils durch eine passende Öffnung in der überlagernden Materialschicht hindurch ragt, bzw. hindurch gefädelt wird.

Gemäß einer weiteren bevorzugten Ausfuhrungsform des erfindungsgemäßen Befestigungseinlegers umgibt der gewölbte Zentralbereich einen radial innenliegenden Ringsteg, der in axialer Richtung mit einem radialen Außenrand des gewölbten Zentralbereichs endet und innerhalb des gewölbten Zentralbereichs ein Ringvolumen definiert. Der auf diese Weise bevorzugt definierte Bereich dient der Aufnahme eines Klebstoffvolumens. Dieser Klebstoff wird bevorzugt durch Einstrahlung von Licht aktiviert oder ausgehärtet, sofern die Einlegescheibe aus durchstrahlbarem oder transparentem Kunststoff bereitgestellt worden ist. Das definierte Ringvolumen gewährleistet aber ebenfalls, dass der Klebstoff in diesem Bereich eingeschlossen bleibt, ohne beispielsweise im radialen Außenbereich der Einlegescheibe Durchgangsöffnungen zu blockieren.

Gemäß einer weiteren bevorzugten Ausfuhrungsform des erfindungsgemäßen Befestigungseinlegers ist der Schaft als Bolzen oder Hohlzylinder vorgesehen, der sich einseitig über die Einlegescheibe hinaus erstreckt. Weiterhin bevorzugt ist der Schaft in einer zentralen oder dezentralen unrunden Öffnung der Einlegescheibe mit einem an die Form angepassten Befestigungsende angeordnet, sodass eine Verdrehsicherung zwischen Einlegescheibe und Schaft bereitgestellt ist. Weiterhin bevorzugt weist der Schaft an einer radialen Außenseite radial vorstehende Verankerungsmerkmale auf, um den Befestigungseinleger über den Schaft in einem Verbundmaterial oder allgemein umgebenden Material zusätzlich verankern bzw. befestigen zu können.

Bevorzugt sind der Schaft und die Einlegescheibe je nach Ausführungsform des Befestigungseinlegers unterschiedlich miteinander verbunden. Eine Möglichkeit besteht darin, dass der Schaft in einer zentralen unrunden Öffnung der Einlegescheibe eingerastet, eingeklemmt, eingeklebt, eingeschweißt oder eingeformt ist. Die bevorzugte unrunde Öffnung stellt eine zusätzliche Verdrehsicherung zwischen Schaft und Einlegescheibe bereit. Damit ergänzen sich die oben beschriebenen konstruktiven Merkmale der Einlegescheibe zur Verdrehsicherung mit der Befestigung des Schafts in der unrunden zentralen oder dezentralen Öffnung.

Weiterhin bevorzugt besteht zumindest die Einlegescheibe aus einem mit Licht durchstrahlbaren Kunststoff. Dies dient der Aktivierung oder Aushärtung eines Klebstoffs, der bevorzugt im gewölbten Bereich der Einlegescheibe aufgebracht worden ist. Weiterhin bevorzugt ist der Schaft an einer Stirnseite angrenzend an die Einlegescheibe und/oder die Einlegescheibe des Befestigungseinlegers in einem zentralen Bereich angrenzend an den Schaft geschlossen ausgebildet. Diese spezielle Konstruktion stellt sicher, dass beispielsweise eine metallische Funktionsstruktur im Funktionsabschnitt des Schafts nicht in Kontakt kommt mit Verstärkungsfasern des Verbundmaterials. Daher wird mit diesen konstruktiven Alternativen sichergestellt, dass Verbundmaterial während der Bauteilherstellung nicht von der Befestigungsseite des Schafts in das Innere des Schafts eindringen kann. Diese spezielle Anordnung verhindert im Speziellen elektrochemische Korrosion, die beispielsweise bei dem Kontakt zwischen Metall und einer verstärkenden Kohlenstofffaser auftritt.

Gemäß einem nicht erfindungsgemäßen Beispiel besteht ein Befestigungseinleger aus Kunststoff mit einer T-förmigen Konfiguration aus einer Einlegescheibe und einem an der Einlegescheibe über einen Befestigungsabschnitt fest angeordneten und über diese einseitig oder beidseitig mit einem Funktionsabschnitt vorstehenden Schaft, von denen zumindest die Einlegescheibe in einem Schaummaterial oder einem Verbundmaterial während einer Bauteilherstellung positionierbar und durch die Bauteilherstellung darin befestigbar ist, in dem die Einlegescheibe zwei einander gegenüberliegend angeordnete Befestigungsseiten aufweist, die jeweils zumindest teilweise eine Anlagefläche bilden und in dem der Schaft eine hohlzylindrische Form mit einer radialen Außenseite und einer radialen Innenseite aufweist und über die radiale Außenseite mit der Einlegescheibe verbunden ist und eine metallische Funktionsstruktur an der radialen Innenseite des hohlzylindrischen Schafts reibschlüssig verankert oder in die radiale Innenseite des hohlzylindrischen Schafts formschlüssig eingeformt ist, sodass ein direkter Kontakt der metallischen Funktionsstruktur nach außen mit dem Verbundmaterial, dem Kunststoffmaterial oder dem Schaummaterial zumindest angrenzend an die Einlegescheibe durch den die Funktionsstruktur umgebenden Schaft und/oder die Einlegescheibe verhindert ist.

Der Befestigungseinleger zeichnet sich erfindungsgemäß bevorzugt dadurch aus, dass er neben einem verlässlichen Halt in einem hergestellten Bauteil eine funktionell wirksame Anordnung einer metallischen Funktionsstruktur innerhalb des Schafts des Befestigungseinlegers ermöglicht. Für eine derartige metallische Funktionsstruktur gibt gerade das innere Volumen der hohlzylindrischen Form des Schafts ausreichend Platz. Zu derartigen metallischen Funktionsstrukturen gehören Drahtgewindeeinsätze, metallische Gewindeeinsätze, metallische Verbindungseinsätze und dergleichen, die in den bevorzugten Kunststoff des Schafts eingeformt oder mit diesem reibschlüssig verbunden werden. Neben diesen konstruktiven Eigenschaften stellt der Befestigungseinleger aber gleichzeitig sicher, dass die metallische Funktionsstruktur nicht über das Befestigungsende des Schafts in Kontakt mit dem Verbundmaterial, dem Kunststoffmaterial oder dem Schaummaterial treten kann. Zu diesem Zweck ist bevorzugt entweder die Einlegescheibe geschlossen ausgebildet oder das Befestigungsende des Schafts weist keine Öffnung in Richtung Einlegescheibe auf. Es ist ebenfalls denkbar, dass der Schaft zwar in Richtung Einlegescheibe offen ausgebildet ist, das Verbundmaterial, das Kunststoffmaterial oder das Schaummaterial aber während der Bauteilherstellung nicht in das hohlzylindrische Innere des Schafts dringen kann. Dies hat zur Folge, dass eventuell im Schaummaterial oder im Verbundmaterial vorhandene Verstärkungsfasern, wie beispielsweise Kohlenstofffasern, nicht in Kontakt mit der metallischen Funktionsstruktur geraten. Auf diese Weise wird wirksam eine elektrochemische Korrosion verhindert, die neben der Funktionalität des Befestigungseinlegers auch dessen Integrität gefährden könnte.

Wie es oben bereits erwähnt worden ist, ist gemäß einer bevorzugten Ausführungsform des Befestigungseinlegers der Schaft an einer Stirnseite angrenzend an die Einlegescheibe und/oder dessen Einlegescheibe in einem zentralen Bereich angrenzend an den Schaft geschlossen ausgebildet. Gemäß einer weiteren bevorzugten Ausfuhrungsform des erfindungsgemäßen Befestigungseinlegers weist der Schaft an der radialen Innenseite ein Innengewinde auf, in dem ein Drahtgewindeeinsatz angeordnet ist.

Gemäß einer bevorzugten Alternative vorliegender Erfindung besteht die metallische Funktionsstruktur aus einem Drahtgewindeeinsatz. Dieser Drahtgewindeeinsatz verstärkt ein an der hohlzylindrischen Innenseite vorhandenes Innengewinde in dem aus Kunststoff bestehenden Schaft. Vorzugsweise wird dieser Drahtgewindeeinsatz nur so weit in die Tiefe des Schafts, d.h. in Richtung der Einlegescheibe in den Schaft eingedreht, dass er nicht an dem Befestigungsende des Schafts aus diesem hinausragt. Damit wird auf jeden Fall die Gefahr einer möglichen elektrochemischen Korrosion durch Kontakt mit dem Schaummaterial, dem Kunststoffmaterial oder dem Verbundmaterial vermieden. In Kombination mit dem Drahtgewindeeinsatz ist es ebenfalls bevorzugt, diesen über den Funktionsabschnitt des Schafts axial hinaus stehen zu lassen. Auf diese Weise lassen sich Konstruktionen eines Drahtgewindeeinsatzes mit dem Schaft kombinieren, der beispielsweise eine in ihrem Durchmesser verjüngte Windung aufweist. Wird eine Schraube in eine derart verjüngte Windung eingeschraubt, dann kann diese sich nach außen ausdehnen und klemmt gleichzeitig die eingeschraubte Schraube in dem Drahtgewindeeinsatz fest. Eine derartige Anordnung wäre nicht möglich, wenn die verjüngte Windung des Drahtgewindeeinsatzes innerhalb des hohlzylindrischen Schafts eingeformt wäre.

Gemäß einer weiteren bevorzugten Ausführungsform des erfindungsgemäßen Befestigungseinlegers weist das Innengewinde radial außen liegende Gewindevertiefungen auf, die eine kontinuierliche oder eine abschnittsweise umlaufende Freimachung umfasst, um die Gewindevertiefung zumindest bereichsweise abzustumpfen.

Der in dem Innengewinde des hohlzylindrischen Schafts eingesetzte Drahtgewindeeinsatz dient der Verstärkung und somit der Sicherung des Bestands des Innengewindes. Gleichzeitig werden über diesen Drahtgewindeeinsatz aber auch mechanische Spannungen an das Material des Schafts übertragen, während beispielsweise eine Schraube in den Drahtgewindeeinsatz eingeschraubt wird. Um vorzugsweise diese mechanischen Spannungen weniger materialintensiv auf den hohlzylindrischen Schaft übertragen zu können, werden gezielt radial außen liegende Gewindevertiefungen abgestumpft. Dies führt dazu, dass sonst an spitz zulaufenden radial außen liegenden Gewindevertiefungen auftretende mechanische Spannungsspitzen abgebaut werden. Auf diese Weise erhöht eine gezielt angeordnete Abstumpfung der sonst spitz zulaufenden Gewindevertiefung die Lebensdauer des Innengewindes des hohlzylindrischen Schafts des Befestigungseinlegers.

Gemäß einer weiteren bevorzugten Ausführungsform des erfindungsgemäßen Befestigungseinlegers endet der Drahtgewindeeinsatz beabstandet zu einem offenen oder geschlossenen axialen Ende des Schafts am Befestigungsabschnitt im Inneren des Schafts. Gemäß einer weiteren bevorzugten Ausführungsform, die oben bereits erwähnt worden ist, erstreckt sich der Drahtgewindeeinsatz über einen axialen Ausgang des Schafts im Funktionsabschnitt hinaus und weist zudem eine im Vergleich zu anderen Wicklungen des Drahtgewindeeinsatzes im Durchmesser verjüngte Wicklung auf.

Gemäß einer weiteren bevorzugten Ausfuhrungsform des erfindungsgemäßen Befestigungseinlegers ist ein metallischer Gewindeeinsatz oder ein metallischer Verbindungseinsatz mit der radialen Innenseite des Schafts verklebt und/oder mit der radialen Innenseite des Schafts kraftschlüssig, vorzugsweise durch klemmen, verbunden.

Die Verwendung von metallischen Gewindeeinsätzen oder von metallischen Verbindungseinsätzen in Kunststoffteilen ist allgemein bekannt. Diese werden beispielsweise in dafür vorgesehenen Bohrungen von Kunststoffgehäusen angeordnet. Dabei liefert neben der klebenden Verbindung zwischen Kunststoffgehäuse und Gewindeeinsatz bzw. Verbindungseinsatz gerade die starre Konstruktion des Kunststoffgehäuses bzw. des Kunststoffteils den nötigen mechanischen Halt, die Stabilität und die mechanisch belastbare Einbaustelle für den Gewindeeinsatz bzw. den Verbindungseinsatz. Im Vergleich zu diesen Lösungen wurde erkannt, dass gerade die Kombination aus Einlegescheibe und damit verbundenem Schaft eine wirksame Haltekonstruktion darstellt. Durch diese Konstruktion in Kombination mit einer Einbettung des Befestigungseinlegers in einem Bauteilmaterial wird die geforderte Stabilität des Schafts bereitgestellt, um einen Gewindeeinsatz oder einen Verbindungseinsatz für eine verlässliche Verbindung ausreichend halten zu können. Da der Schaft mit verlässlicher Stabilität in einem Bauteil, beispielsweise aus Verbundmaterial, verankert wird, wird mit einem eingeklebten Gewindeeinsatz oder Verbindungseinsatz in gleicher Weise eine verlässliche Verbindung erzielt wie mit einem in dem Schaft eingeformten gewickelten Drahtgewindeeinsatz. Denn gemäß einer weiteren bevorzugten Ausführungsform des erfindungsgemäßen Befestigungseinlegers ist in die radiale Innenseite des Schafts ein metallischer Gewindeeinsatz oder ein metallischer Verbindungseinsatz oder ein gewickelter Drahtgewindeeinsatz eingeformt, sodass dieser zumindest formschlüssig im Schaft gehalten sind.

Das Einformen des Gewindeeinsatzes oder des metallischen Verbindungseinsatzes oder des Drahtgewindeeinsatzes kann auf unterschiedliche Art und Weise erfolgen. Eine Möglichkeit besteht darin, durch Wärmezufuhr den jeweiligen Einsatz zu erwärmen, sodass dieser seine Wärmemenge an die Innenseite des Schafts überträgt, dadurch aufweicht und somit den Einsatz in die Innenseite einformt. Gemäß einer weiteren bevorzugten Alternative ist es möglich, den Gewindeeinsatz oder Verbindungseinsatz mit einem selbstschneidenden oder selbstformenden Außengewinde auszustatten. Mit diesem Gewinde wird dann der Einsatz in das hohlzylindrische Innere des Schafts eingeschraubt. Damit schneidet sich der Einsatz selbst ein haltendes Gewinde in der Innenseite des Schafts.

Weiterhin ist es bevorzugt, den gewickelten Drahtgewindeeinsatz bereits während der Herstellung des Schaftes in die Innenseite des Schafts einzuformen. Generell ist zu bemerken, dass ein metallischer Gewindeeinsatz ein Innengewinde vorgibt, während seine radiale Außenseite der Befestigung des Gewindeeinsatzes im Schaft dient. Ein metallischer Verbindungseinsatz stellt anstelle eines Innengewindes eine andere beliebige Befestigungsstruktur bereit. Dies könnte beispielsweise eine Rastverbindung oder eine Bajonettverbindung sein. Ein gewickelter Drahtgewindeeinsatz, der an der Innenseite des Schafts einformbar ist, ist bevorzugt ein auf Block gewickelter Drahtgewindeeinsatz. Dies stellt sicher, dass selbst während der Herstellung des Schafts bei im Schaftinneren angeordnetem Drahtgewindeeinsatz kein flüssiger Kunststoff in das Innere des Drahtgewindeeinsatzes dringen kann. In diesem Zusammenhang ist natürlich auch bevorzugt, den Drahtgewindeeinsatz mithilfe eines Stopfens zu verschließen. Somit ist gewährleistet, dass auch nach der Herstellung des Befestigungseinlegers das Innengewinde des eingeformten Drahtgewindeeinsatzes nicht durch Kunststoffreste blockiert ist.

Weiterhin erfindungsgemäß bevorzugt endet der Gewindeeinsatz oder der Verbindungseinsatz beabstandet zu einem axialen Ausgang des Schafts am Befestigungsabschnitt im Inneren des Schafts. Weiterhin bevorzugt umfasst der Gewindeeinsatz einen Drahtgewindeeinsatz zur Gewindeverstärkung in seinem Inneren.

Vorliegende Erfindung offenbart ebenfalls ein Bauteil bestehend aus einem Schaummaterial, Kunststoffmaterial oder einem Verbundmaterial, in welchem ein Befestigungseinleger gemäß einem der oben beschriebenen Ausführungsformen innerhalb der genannten Materialalternativen fest angeordnet ist. Entsprechend ist der Befestigungseinleger in seinen verschiedenen bevorzugten Ausführungsformen in einem Laminatbauteil, in einem Schichtbauteil oder in einem Verbundbauteil eingebettet, wobei diese Bauteile vorzugsweise wenigstens eine textile Schicht oder eine Faserverstärkungsschicht aufweisen. Somit besteht das Bauteil vorzugsweise aus Struktur- oder Integralschäumen mit einer Kohlenstofffaserverstärkung oder aus mit Harz verstärkten Gewebe-, Vlies- oder Filzschichten. Gemäß einer weiteren bevorzugten Alternative wird der erfindungsgemäß bevorzugte Befestigungseinleger in Faser-Matrix-Halbzeuge, wie beispielsweise BMC und SMC (siehe oben), eingebettet, die vorzugsweise kohlenstofffaserhaltige Pressmassen darstellen. Gemäß einer weiteren bevorzugten Alternative wird der erfindungsgemäß bevorzugte Befestigungseinleger in kohlenstofffaserhaltige Organobleche mittels Hybridmolding eingebettet.

Des Weiteren umfasst vorliegende Erfindung eine Verbindung aus mindestens einem ersten und einem zweiten Bauteil, von denen zumindest das erste Bauteil dem im vorhergehenden Absatz beschriebenen Bauteil mit eingebettetem Befestigungseinleger entspricht. Im Rahmen dieser Verbindung werden das zumindest eine erste und das eine zweite Bauteil über ein Befestigungsmittel und den Befestigungseinleger im ersten Bauteil miteinander verbunden.

Vorliegende Erfindung offenbart zudem ein Herstellungsverfahren für einen T-förmigen Befestigungseinleger gemäß einer der oben beschriebenen Ausführungsformen. Dieses Herstellungsverfahren weist die folgenden Schritte auf: Bereitstellen einer Spritzgussform, deren Formhohlraum in komplementärer Form die strukturellen Merkmale des Befestigungseinlegers vorgibt, Füllen des Formhohlraums mit mindestens einem fließenden Kunststoff, Aushärten des im Formhohlraum eingeschlossenen Kunststoffs und Entformen des Befestigungseinlegers aus der Spritzgussform.

Grundsätzlich wird der erfindungsgemäße Befestigungseinleger gemäß seinen bevorzugten Ausführungsformen mithilfe eines Spritzgussverfahrens hergestellt. Dieses Spritzgussverfahren eröffnet ausreichende Vielfalt, um die verschiedenen Geometriemerkmale, Festigkeitsanforderungen, Konfigurationsausgestaltungen im Hinblick auf den Funktionsabschnitt des Schafts sowie die für die Befestigung nötigen konstruktiven Merkmale umsetzen zu können. Dabei hat sich als besonders vorteilhaft erwiesen, ein 1KSpritzgussverfahren unter Verwendung von nur einem Kunststoff zur Füllung der Spritzgussform einzusetzen. In gleicher Weise ist gerade bei höheren mechanischen Anforderungen an den herzustellenden Befestigungseinleger auch ein 2K-Spritzgussverfahren von Vorteil, bei dem zwei unterschiedliche Kunststoffe bei der Herstellung eingesetzt werden. Denn dieses 2K-Spritzgussverfahren eröffnet die Möglichkeit, beispielsweise zwei Kunststoffe unterschiedlicher chemischer Zusammensetzung oder zwei Kunststoffe mit einem unterschiedlichen großen Anteil an Verstärkungsfasern für die Herstellung des Schafts und der Einlegescheibe zu verwenden. Natürlich sind hier auch ganz andere Kombinationen von Materialkonfigurationen möglich (siehe unten).

Gemäß einer bevorzugten Ausfuhrungsform des Herstellungsverfahrens wird der Formhohlraum mit nur einem Kunststoff gefüllt, sodass der Befestigungseinleger in einem 1K-Spritzgussverfahren hergestellt wird oder der Formhohlraum wird im Bereich der auszuformenden Einlegescheibe mit einem ersten Kunststoff und im Bereich des Schafts mit einem zweiten Kunststoff gefüllt, sodass der Befestigungseinleger in einem 2K-Spritzgussverfahren hergestellt wird.

Das bevorzugte 1K-Spritzgussverfahren liefert einen in Bezug auf die Einlegescheibe und den Schaft des Befestigungseinlegers stoffgleich ausgebildeten Befestigungseinleger. Bereits im Hinblick auf die Materialwahl und die auszuführenden Schritte ist dieses Verfahren mit weniger Aufwand verbunden im Vergleich zu beispielsweise einem 2K-Spritzgussverfahren. Das 2K-Spritzgussverfahren eröffnet bevorzugt die Möglichkeit, im Hinblick auf die konstruktiven Anforderungen und auf die funktionellen Anforderungen des Schafts und der Einlegescheibe entsprechend ausgewählte Kunststoffe im 2K-Spritzgussverfahren zu verarbeiten. Da vorzugsweise die Einlegescheibe hohe Haltekräfte des Befestigungseinlegers in das Bauteilmaterial ableitet, erscheint hier ein Kunststoff hoher mechanischer Stabilität empfehlenswert zu sein. Somit wird bevorzugt für die Einlegescheibe ein Kunststoff mit einem hohen Anteil an Verstärkungsfasern in die Spritzgussform gespritzt. Im Hinblick auf den Kunststoff zur Ausbildung des Schafts ist es bevorzugt, einen nach Aushärtung gut formbaren Kunststoff zu nutzen. Denn dieser Kunststoff eröffnet die Möglichkeit, den Schaft des Befestigungseinlegers mit verschiedenen Gewindeeinsätzen und Verbindungseinsätzen zu kombinieren oder diese in die radiale Innenwand des Schafts einzuformen.

Gemäß einer weiteren bevorzugten Ausführungsform vorliegender Erfindung, die im Speziellen auf das 2K-Spritzgussverfahren aufbaut, sind der erste und der zweite Kunststoff gleich und unterscheiden sich in einem Anteil an Verstärkungsfasern. Alternativ dazu sind der erste und der zweite Kunststoff in einer chemischen Zusammensetzung verschieden oder der erste und der zweite Kunststoff sind in einer chemischen Zusammensetzung verschieden und weisen unterschiedliche Anteile an Verstärkungsfasern auf. Mit dieser bevorzugten Materialgestaltung, die auf die zu erfüllenden Eigenschaften der Komponenten des Befestigungseinlegers Bezug nimmt, werden die oben beschriebenen konstruktiven Merkmale des Befestigungseinlegers durch die Materialwahl optimal unterstützt.

Gemäß einer weiteren bevorzugten Ausführungsform vorliegender Erfindung ist zumindest die Einlegescheibe nach der Herstellung aus dem ersten Kunststoff transparent oder zumindest mit Licht durchstrahlbar ausgebildet.

Es hat sich häufig als schwierig erwiesen, den Befestigungseinleger bei der Bauteilherstellung positionsgenau in der Bauteilform anordnen und dort fixieren oder halten zu können. Denn bereits die Anordnung einer weiteren Materiallage über dem Befestigungseinleger kann dazu führen, dass seine zuvor eingestellte Position verändert wird. Als vorteilhaft hat sich in diesem Zusammenhang erwiesen, den Befestigungseinleger mithilfe eines durch Licht aktivierbaren oder aushärtbaren Klebstoffs während der Bauteilherstellung vorzufixieren. Zu diesem Zweck wird bevorzugt ein derartiger Kleber an der Unterseite der Einlegescheibe, vorzugsweise in dem gewölbten Bereich der Einlegescheibe, aufgebracht und nachfolgend die Einlegescheibe auf der vorhandenen Material-, Kunststoff- oder Gewebeschicht angeordnet. Mithilfe der gezielten Einstrahlung von Licht wird dieser Klebstoff aktiviert und/oder sogar ausgehärtet, sodass der Befestigungseinleger vorfixiert ist. Diese Klebeverbindung ersetzt nicht den später durch das Bauteilmaterial zu realisierenden Halt des Befestigungseinlegers im Bauteilverbund. Vielmehr stellt er eine Übergangsfixierung her, sodass die weiteren Gestaltungen der Materiallagen, die den Befestigungseinleger überlagern, dessen Positionierung nicht gefährden können.

Gemäß einer weiteren bevorzugten Ausführungsform vorliegender Erfindung definiert die Spritzgussform eine Einlegescheibe, die zwei einander gegenüberliegend angeordnete Befestigungsseiten mit mehreren außermittig um den Schaft angeordneten Durchgangsöffnungen aufweist, die die Befestigungsseiten miteinander verbinden und von denen mindestens eine Durchgangsöffnung einen vollständig umlaufenden oder einen abschnittsweise umlaufenden Randvorsprung aufweist, der als Verzahnung ausgebildet ist und sich einseitig oder beidseitig über die jeweilige Befestigungsseite der Einlegescheibe hinaus erstreckt. Bezug nehmend auf die oben beschriebenen bevorzugten konstruktiven Ausgestaltungen der Einlegescheibe zur verlässlichen Anordnung des Befestigungseinlegers im Bauteil ist es bevorzugt, dass die Spritzgussform genau die bevorzugten konstruktiven Merkmale der Einlegescheibe durch ihre komplementäre Formgestaltung vorgibt. Entsprechend ergeben sich aus dieser komplementären Formgestaltung dann die oben beschriebenen Vorteile der entsprechend ausgeformten Einlegescheibe.

Alternativ oder ergänzend zur Gestaltung der Spritzgussform zur speziellen Ausbildung der Einlegescheibe ist es weiterhin erfindungsgemäß bevorzugt, dass die Spritzgussform einen Kern enthält, der eine radiale Innenwand eines Schafts des Befestigungseinlegers definiert, sodass ein Gewinde an der radialen Innenwand ausgebildet wird. Diese bevorzugte Ausgestaltung der Spritzgussform nimmt auf die Konstruktion des Schafts Bezug. Denn der Schaft wird während des Spritzgussverfahrens darauf angepasst, einen bevorzugten Drahtgewindeeinsatz oder anders geformte Gewindeeinsätze in seinem Inneren verlässlich aufnehmen zu können.

Gemäß einer weiteren bevorzugten Ausführungsform zur Ausgestaltung des Schafts wird ein Drahtgewindeeinsatz in dem Gewinde der radialen Innenwand des Schafts nach dem Entformen des Befestigungseinlegers installiert. Eine derartige Installation nutzt ein bekanntes Einbauwerkzeug für Drahtgewindeeinsätze. Das Einbauwerkzeug erfasst den Drahtgewindeeinsatz an seinem Einbauzapfen oder an einem ähnlichen Installationsende und dreht diesen in das Innengewinde des Schafts ein.

Weiterhin bevorzugt umfasst das Herstellungsverfahren den weiteren Schritt: Positionieren eines Drahtgewindeeinsatzes oder eines Gewindeeinsatzes oder eines Verbindungseinsatzes im Formhohlraum und Einformen des Drahtgewindeeinsatzes, des Gewindeeinsatzes oder des Verbindungseinsatzes beim Füllen des Formhohlraums mit flüssigem Kunststoff. Gemäß dieser bevorzugten Verfahrensalternative zur Herstellung des Befestigungseinlegers wird der Funktionsabschnitt des Schafts bereits während des Herstellungsverfahrens weiter ausgestaltet. Damit wird vermieden, dass sich an die Herstellung des Befestigungseinlegers noch ein spezieller Installationsschritt für eine metallische Funktionsstruktur anschließen muss. Denn gemäß der bevorzugten Ausgestaltungen des Herstellungsverfahrens ist es in effektiver Weise möglich, bekannte Gewindeeinsätze oder Verbindungseinsätze oder auf Block gewickelte Drahtgewindeeinsätze innerhalb der Spritzgussform derart zu platzieren, dass sie nach dem Ausformen des hergestellten Befestigungseinlegers die Funktion der Innenwand des Schafts entsprechend gestalten.

Gemäß einer weiteren bevorzugten Ausführungsform des Herstellungsverfahrens des Befestigungseinlegers umfasst dieses den weiteren Schritt: Installieren eines Gewindeeinsatzes oder eines Verbindungseinsatzes über ein thermisches oder ein mechanisches Verfahren im Schaft des Befestigungseinlegers, nachdem der Befestigungseinleger entformt worden ist. Gemäß dieser bevorzugten Ausführungsform des Herstellungsverfahrens wird zunächst der Befestigungseinleger im Spritzgussverfahren hergestellt. Nachdem dieser aus der Spritzgussform ausgeformt worden ist, schließt sich ein Installationsschritt für den Gewindeeinsatz, den Verbindungseinsatz oder ein anderes metallisches Funktionselement an. In diesem Zusammenhang wird beispielsweise der Kunststoff des Schafts thermisch aufgeweicht, um einen Gewindeeinsatz oder einen Verbindungseinsatz darin einformen zu können. Dieses Aufwärmen ist vorzugsweise mittels Reibschweißen, mittels Ultraschallschweißen oder durch Einstrahlung mithilfe einer Wärmequelle möglich. Alternativ dazu ist es ebenfalls bevorzugt, den Gewindeeinsatz oder den Verbindungseinsatz mit einem selbstschneidenden oder selbstfurchenden Außengewinde bereitzustellen, sodass dieser in den Schaft des Befestigungseinlegers eingeschraubt werden kann. Basierend auf dieser Vorgehensweise wird der Gewindeeinsatz oder Verbindungseinsatz reibschlüssig und formschlüssig innerhalb des Schafts gehalten. Weiterhin bevorzugt ist die metallische Funktionsstruktur federnd konstruiert, sodass sie in einem komprimierten Zustand in den Schaft eingesetzt werden kann. Nachdem dieses Einsetzen abgeschlossen ist, wird die Funktionsstruktur entlastet, sodass sie sich innerhalb des Inneren des Schafts ausdehnt. Dieses Ausdehnen hat zur Folge, dass sich die metallische Funktionsstruktur im hohlzylindrischen Inneren des Schafts verklemmt und/oder zumindest reibschlüssig verankert.

Vorliegende Erfindung offenbart ein weiteres Herstellungsverfahren für eine der oben beschriebenen Ausführungsformen des erfindungsgemäßen Befestigungseinlegers. Dieses Herstellungsverfahren weist die folgenden Schritte auf: Bereitstellen einer Einlegescheibe des Befestigungseinlegers aus Kunststoff, vorzugsweise aus transparentem oder mit Licht durchstahlbarem Kunststoff, die zwei einander gegenüberliegend angeordnete Befestigungsseiten mit mehreren außermittig um den Schaft angeordneten Durchgangsöffnungen aufweist, die die Befestigungsseiten miteinander verbinden und von denen mindestens eine Durchgangsöffnung einen vollständig umlaufenden oder einen abschnittsweise umlaufenden Randvorsprung aufweist, der als Verzahnung ausgebildet ist und sich einseitig oder beidseitig über die jeweilige Befestigungsseite der Einlegescheibe hinaus erstreckt, Bereitstellen eines Schafts des Befestigungseinlegers und Verbinden der Einlegescheibe und des Schafts unverlierbar zu einem T-förmigen Befestigungseinleger.

Diese alternative bevorzugte Herstellungsroute für den T-förmigen Befestigungseinleger geht davon aus, dass zunächst die Einlegescheibe und der Schaft des Befestigungseinlegers separat hergestellt werden. In einem nachfolgenden Schritt werden die beiden Grundbestandteile des Befestigungseinlegers miteinander verbunden. Diese Vorgehensweise eröffnet die Möglichkeit, zunächst die Einzelkomponenten des Befestigungseinlegers optimal auf die jeweiligen Anforderungen im späteren Einbauzustand im Bauteil abstimmen zu können. Entsprechend wird ein mechanisch stabiler Kunststoff mit Faserverstärkung zur Herstellung der Einlegescheibe verwendet. Da bevorzugt der Schaft nicht aus dem gleichen Kunststoff bestehen muss, ist es nach dieser Herstellungsroute nicht erforderlich, ein aufwändiges 2K-Spritzgussverfahren auf die Herstellung des Befestigungseinlegers abzustimmen. Denn der Schaft wird parallel zur Einlegescheibe aus einem anderen Kunststoff hergestellt, der die funktionellen Anforderungen erfüllt. Nachfolgend werden dann die Einlegescheibe und der Schaft derart miteinander verbunden, dass sie eine verlässliche konstruktive Einheit darstellen.

In bevorzugter Ausgestaltung des oben beschrieben Herstellungsverfahrens werden die Einlegescheibe und der Schaft verbunden durch: mechanisches Klemmen oder Verrasten des Schafts in einer zentralen oder dezentralen Öffnung der Einlegescheibe oder thermisches Verbinden des Schafts und der Einlegescheibe, vorzugsweise mittels Ultraschallschweißen oder Reibschweißen, oder Kleben des Schafts und der Einlegescheibe. Diese verschiedenen bevorzugten Verbindungsmöglichkeiten für den Schaft und die Einlegescheibe gewährleisten eine verlässliche Verbindung zwischen Einlegescheibe und Schaft. Gleichzeitig ermöglichen sie ebenfalls, dass gerade bei einem mechanischen Klemmen und Verrasten des Schafts in einer zentralen oder dezentralen Öffnung der Einlegescheibe die Kunststoffe oder allgemein die Materialien zur Herstellung der Einlegescheibe und des Schafts frei wählbar sind. Auf diese Weise ist der Befestigungseinleger an beliebige Bauteilkonfigurationen anpassbar. Gemäß einer weiteren bevorzugten Ausführungsform des vorliegenden Herstellungsverfahrens weist die Einlegescheibe zwei einander gegenüberliegend angeordnete Befestigungsseiten mit mehreren außermittig um den Schaft angeordneten Durchgangsöffnungen auf, die die Befestigungsseiten miteinander verbinden und von denen mindestens eine Durchgangsöffnung einen vollständig umlaufenden oder einen abschnittsweise umlaufenden Randvorsprung aufweist, der als Verzahnung ausgebildet ist und sich einseitig oder beidseitig über die jeweilige Befestigungsseite der Einlegescheibe hinaus erstreckt.

Gemäß einer weiteren bevorzugten Ausführungsform des oben beschriebenen Herstellungsverfahrens wird eine radiale Innenwand des Schafts des Befestigungseinlegers mit einem Gewinde bereitgestellt und ein Drahtgewindeeinsatz in dem Gewinde der radialen Innenwand des Schafts installiert. Oben wurde bereits beschrieben, dass ein an der radialen Innenwand des Schafts angeordnetes Gewinde mithilfe eines Drahtgewindeeinsatzes verstärkt werden kann. Diese Ausgestaltung des Schafts ist in gleicher Weise nach dem Herstellen des Befestigungseinlegers im Spritzgussverfahren wie bei einer separaten Herstellung von Einlegescheibe und Schaft und dem nachfolgenden Zusammensetzen dieser beiden Strukturkomponenten möglich. Somit wird der Schaft bevorzugt mit Innengewinde hergestellt und nachfolgend der Drahtgewindeeinsatz verstärkend in diesem Innengewinde installiert. Nachfolgend werden dann gemäß den oben beschriebenen Herstellungsrouten die Einlegescheibe und der Schaft verbunden.

Alternativ zur Installation des Drahtgewindeeinsatzes ist es in vorliegendem Herstellungsverfahren ebenfalls bevorzugt, einen Gewindeeinsatz oder einen Verbindungseinsatz über ein thermisches oder ein mechanisches Verfahren oder ein Klebeverfahren im Schaft zu installieren, vor oder nachdem die Einlegescheibe mit dem Schaft verbunden worden ist.

Nachfolgend wird ein Ausstattungsverfahren für einen T-förmigen Befestigungseinleger, insbesondere für einen T-förmigen Befestigungseinleger gemäß der oben beschriebenen bevorzugten konstruktiven Ausgestaltungen. Dieses Ausstattungsverfahren weist die folgenden Schritte auf: Bereitstellen eines einzelnen T-förmigen Befestigungseinlegers oder eines Bauteils mit daran befestigtem T-förmigen Befestigungseinleger und Installieren eines Drahtgewindeeinsatzes in einem Gewinde an einer radialen Innenwand eines Schafts des T-förmigem Befestigungseinlegers oder Installieren eines Gewindeeinsatzes oder eines Verbindungseinsatzes über ein thermisches oder ein mechanisches Verfahren oder ein Klebeverfahren in einem Schaft des T-förmigen Befestigungseinlegers.

Durch dieses beispielhafte Ausstattungsverfahren wird unterstrichen, dass der erfindungsgemäß bevorzugte Befestigungseinleger bereits während seiner Herstellung oder aber in einem nachgeschalteten Ausstattungsverfahren mit seiner metallischen Funktionsstruktur ausgestattet werden kann. Entsprechend wird bevorzugt der einzeln vorliegende Befestigungseinleger oder ein bereits in einem Bauteil eingebetteter Befestigungseinleger mit einem Drahtgewindeeinsatz, einem Gewindeeinsatz oder einem Verbindungseinsatz ausgestattet. Diese Schritte erfolgen in der gleichen Weise, wie sie oben bereits beschrieben worden sind. Das Ausstattungsverfahren eröffnet die Flexibilität, die Ausstattung des Schafts beim Hersteller des Befestigungseinlegers oder beim Bauteilhersteller oder sogar beim Bauteilabnehmer vornehmen zu können.

Vorliegende Erfindung offenbart zudem ein Herstellungsverfahren für ein Bauteil aus einem Verbundmaterial, aus Kunststoff oder aus einem anderen Schaummaterial, mit einem T-förmigen Befestigungseinleger gemäß den oben beschriebenen erfindungsgemäßen Ausführungsformen. Das erfindungsgemäße Herstellungsverfahren für das Bauteil weist die folgenden Schritte auf: Bereitstellen einer Bauteilform mit mindestens einer ersten Materiallage, vorzugsweise einer Faserlage oder Kunststofflage oder einer Gewebelage, wobei die Bauteilform eine komplementäre Gestalt eines herzustellenden Bauteils festlegt, Positionieren und Vorfixieren des Befestigungseinlegers auf der mindestens einen ersten Materiallage, wobei das Vorfixieren durch Herstellen einer stoffflüssigen und/oder formschlüssigen Verbindung zwischen einer der ersten Materiallage zugewandten ersten Befestigungsseite der Einlegescheibe und der ersten Materiallage erfolgt, nach Schritt II Einbetten der Verbindung aus Befestigungseinleger und erster Materiallage in einen Kunststoff, einen faserverstärkten Kunststoff, ein Harz oder in ein Schaummaterial mit oder ohne Faserverstärkung.

Der bevorzugte Befestigungseinleger wird in Bauteilen unterschiedlichster Materialwahl eingebettet. Dabei unterstützen gerade die konstruktiven Merkmale der Einlegescheibe eine verlässliche Positionierung des Befestigungseinlegers während der Herstellung. Vorzugsweise sind die Verzahnungen und die weiteren Gestaltungen der Einlegescheibe dafür geeignet, den Befestigungseinleger auf einer ersten Materiallage zu halten bzw. zu fixieren. Diese erste Materiallage besteht gemäß unterschiedlicher bevorzugter Ausführungsformen aus einer Faserlage aus Kohlenstofffasern oder Glasfasern, aus einer Gewebeschicht derartiger Fasern, aus einem Vlies, einem Filz oder aus einer vorverarbeiteten Pressmasse mit verstärkenden Fasern. Des Weiteren ist es bevorzugt, den Befestigungseinleger auf einer ersten Schicht aus einem Kunststoff oder einem Struktur- oder Integralschaum mit einer Faserverstärkung, beispielsweise einer Kohlenstofffaserverstärkung, anzuordnen. Denn auch auf dieser strukturierten Materialschicht unterstützt die konstruktive Gestaltung der Einlegescheibe ein verlässliches Positionieren des Befestigungseinlegers. Nachdem dann der Befestigungseinleger an der gewünschten Position angeordnet worden ist, wird der verbleibende Hohlraum der Bauteilform mit dem gewünschten Bauteilmaterial gefüllt und nachfolgend das Bauteil entformt.

Gemäß einer weiteren bevorzugten Ausführungsform des Herstellungsverfahrens weist dieses den weiteren Schritt auf: Anordnen mindestens einer zweiten Materiallage, vorzugsweise einer zweiten Faserlage oder Kunststofflage oder einer Gewebelage, auf einer der zweiten Materiallage zugewandten zweiten Befestigungsseite der Einlegescheibe derart, dass die zweite Materiallage den Schaft des Befestigungseinlegers umgibt.

Vorzugsweise weist das Bauteil mindestens zwei Materialschichten bzw. -lagen auf, die gemäß einer Ausführungsform aus verstärkten Fasern aufgebaut sind. Derartige Fasern sind beispielsweise Kohlenstofffasern oder Glasfasern, wobei hier auch andere Verstärkungsmaterialien in die Bauteilform eingelegt werden können. Da die Einlegescheibe des Befestigungseinlegers gemäß den oben beschriebenen bevorzugten Ausführungsformen auch an der zweiten Befestigungsseite eine vorstehende Verzahnung aufweist, sorgt diese Verzahnung auch für einen zusätzlichen Halt in der zweiten Faserlage oder Materiallage. Somit wird der Befestigungseinleger zwischen zwei angrenzenden Faserlagen oder Materiallagen zumindest mechanisch vorfixiert, sodass er positionsgenau während des Herstellungsverfahrens des Bauteils angeordnet ist.

Gemäß einer weiteren bevorzugten Ausführungsform des vorliegenden Herstellungsverfahrens erfolgt ein Tränken des Stapels aus erster und zweiter Materiallage mit zwischengeordnetem Befestigungseinleger mit einem flüssigen Harzmaterial sowie ein Aushärten des Materials zu einem Bauteil aus einem mehrlagigen Verbundmaterial.

Weiterhin erfindungsgemäß bevorzugt zeichnet sich das Herstellungsverfahren dadurch aus, dass das Vorfixieren durch eine formschlüssige Verbindung mithilfe einer Verzahnung an der ersten Befestigungsseite der Einlegescheibe hergestellt wird, die zumindest in die erste Materiallage eingreift und sich darin verhakt. Gemäß einer alternativen oder ergänzenden Ausfuhrungsform des vorliegenden Herstellungsverfahrens erfolgt das Vorfixieren durch eine stoffschlüssige Verbindung mithilfe eines verbindenden Klebstoffs zwischen der ersten Befestigungsseite der Einlegescheibe und der ersten Materiallage, der mithilfe von Licht und/oder Wärme ausgehärtet wird.

Wie bereits oben erläutert worden ist, gewährleistet die Verzahnung der Einlegescheibe eine sichere Positionierung und Fixierung dieser Position auf und zwischen den Materiallagen des herzustellenden Bauteils. Dazu greift die Verzahnung in die jeweils angrenzende Materiallage ein. Dies gilt sowohl für eine Materiallage die an nur einer Befestigungsseite angeordnet ist wie auch für zwei Materiallagen, die an den zwei aneinander gegenüberliegend angeordneten Befestigungsseiten der Einlegescheibe angeordnet sind. Um diese formschlüssige Fixierung bzw. Positionshilfe zu unterstützen, ist es zudem bevorzugt, den Befestigungseinleger mithilfe von Klebstoff vorzufixieren. In diesem Zusammenhang hat es sich als besonders hilfreich erwiesen, lichtaushärtenden Klebstoff zu verwenden.

Gemäß einer weiteren bevorzugten Ausfuhrungsform vorliegender Erfindung wird ein Klebstoff in einer konkaven Vertiefung der ersten Befestigungsseite des Befestigungseinlegers aufgebracht und der Klebstoff durch Lichteinstrahlung nach dem Positionieren auf der ersten Materiallage ausgehärtet, in dem die aus einem transparenten oder mit Licht durchstrahlbaren Material bestehende Einlegescheibe bestrahlt wird. Da bevorzugt die vorfixierende Klebestelle auf den Bereich der konkaven Vertiefung beschränkt ist, ergänzt sich die Klebestelle optimal mit der mechanischen Vorfixierung der Einlegescheibe. Zudem beeinflusst die Klebestelle nicht negativ das Einbetten des Befestigungseinlegers in das Bauteilmaterial. Denn die Klebestell blockiert bevorzugt nicht die Öffnungen im radialen Außenbereich der Einlegescheibe, sodass diese von beispielsweise einem tränkenden Harzmaterial durchströmt werden können.

Gemäß einer weiteren bevorzugten Ausführungsform des vorliegenden Herstellungsverfahrens erfolgt in einem weiteren Schritt ein Fixieren der zweiten Befestigungsseite der Einlegescheibe zumindest mithilfe einer formschlüssigen Verbindung an der zweiten Materiallage, indem eine Verzahnung an der zweiten Befestigungsseite der Einlegescheibe zumindest in die zweite Materiallage eingreift. Des Weiteren ist es alternativ zu der oben beschriebenen mechanischen Vorfixierung oder ergänzend dazu bevorzugt, den Befestigungseinleger in der zumindest einen ersten Materiallage anzunähen.

Gemäß einer weiteren bevorzugten Ausführungsform des vorliegenden Herstellungsverfahrens wird das Bauteil in einem RTM-Verfahren oder durch Kaltpressen oder durch Warmpressen.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine perspektivische Ansicht einer bevorzugten Ausfuhrungsform eines Befestigungseinlegers mit einem einseitigen Schaft,
- Figur 2: eine perspektivische Darstellung einer bevorzugten Ausführungsform eines Befestigungseinlegers mit zweiseitigem Schaft,
- Figur 3a, b: eine Seitenansicht und eine perspektivische Ansicht einer weiteren bevorzugten Ausführungsform eines Befestigungseinlegers mit zweiseitigem Schaft,
- Figur 4: eine seitliche Schnittansicht einer bevorzugten Ausführungsform des Befestigungseinlegers mit einer Verzahnung in einem radialen Außenbereich der Einlegescheibe an einer Befestigungsseite, die vom Schaft abgewandt ist,
- Figur 5: eine seitliche Schnittdarstellung einer bevorzugten Ausführungsform eines Befestigungselements mit einer zweiseitigen Verzahnung an der Einlegescheibe in einem radialen Außenbereich,
- Figur 6: eine seitliche Schnittdarstellung einer bevorzugten Ausführungsform des Befestigungseinlegers mit einer Einlegescheibe, die eine beidseitige Verzahnung in einem radialen Außenbereich und in einem radialen Zentralbereich aufweist,
- Figur 7: eine seitliche Schnittdarstellung einer bevorzugten Ausftihrungsform des Befestigungseinlegers mit einer Verzahnung der Einlegescheibe ähnlich wie in Figur 6 und einem bevorzugten gewölbten Zentralbereich an einer dem Schaft abgewandten Befestigungsseite der Einlegescheibe,
- Figur 8: eine seitliche perspektivische Schnittdarstellung einer bevorzugten Ausführungsform des Befestigungseinlegers mit einem Innengewinde und einem Drahtgewindeeinsatz mit verjüngter Windung,
- Figur 9: eine perspektivische Ansicht von unten einer bevorzugten Ausführungsform des Befestigungseinlegers,
- Figur 10: eine Seitenansicht des Befestigungseinlegers gemäß Figur 7,

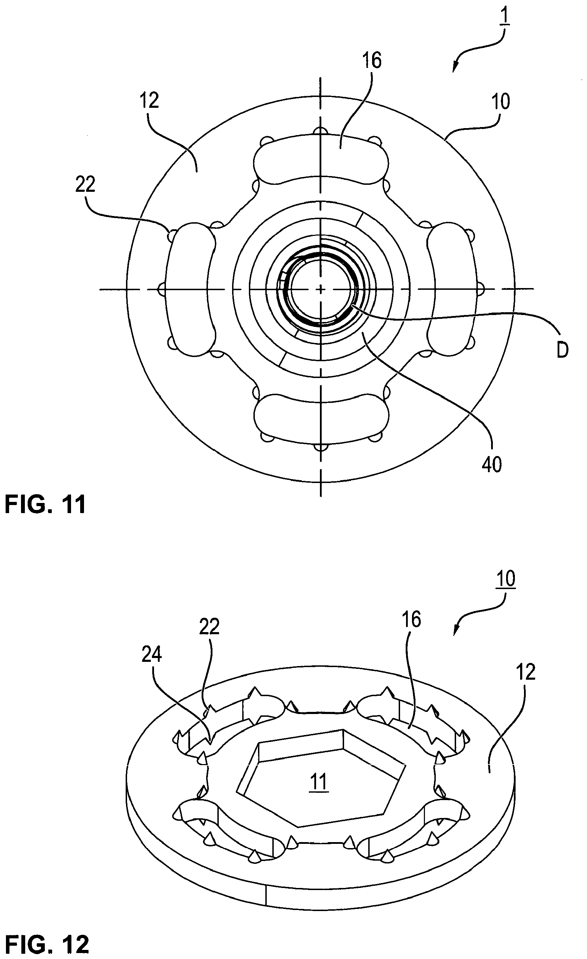

- Figur 11: eine Draufsicht auf eine bevorzugte Ausführungsform des Befestigungseinlegers gemäß Figur 10 mit einem in einem Innengewinde des Schafts installierten Drahtgewindeeinsatzes,
- Figur 12: eine bevorzugte Ausführungsform einer separaten Einlegescheibe, die bevorzugt mit einem separaten Schaft verbindbar ist,

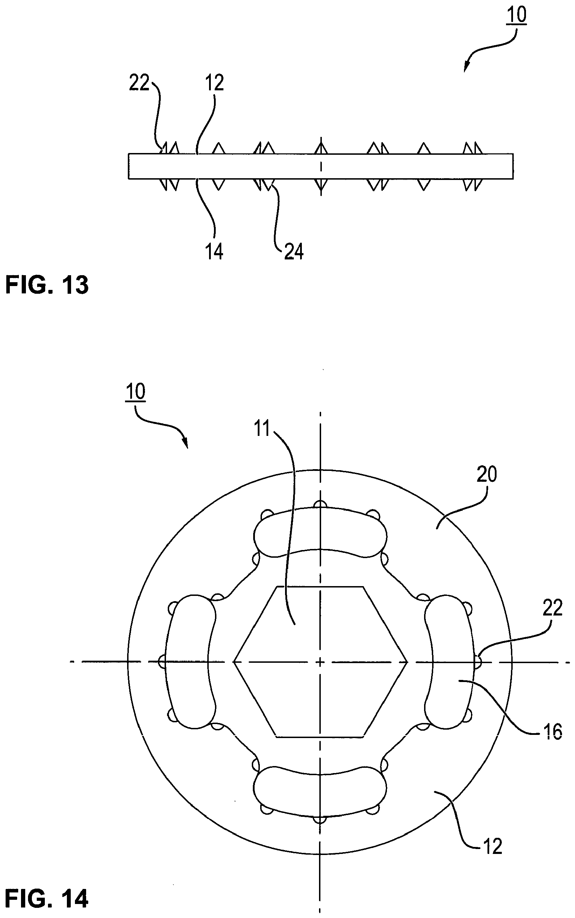

- Figur 13: eine Seitenansicht der Einlegescheibe gemäß Figur 12,
- Figur 14: eine Draufsicht auf die Einlegescheibe gemäß Figur 12,
- Figur 15: eine weitere bevorzugte Ausführungsform einer separaten Einlegescheibe in einer perspektivischen Ansicht von oben,
- Figur 16: eine perspektivische Ansicht der Einlegescheibe gemäß Figur 15 von unten,
- Figur 17: eine bevorzugte Ausführungsform eines Bauteils mit einem darin eingebetteten bevorzugten Befestigungseinleger, wobei im Schaft ein Drahtgewindeeinsatz eingeformt ist,
- Figur 18: eine bevorzugte Verbindung zwischen einem ersten und einem zweiten Bauteil mithilfe des bevorzugten Befestigungseinlegers, wobei der Schaft einen eingeformten Gewindeeinsatz aufweist,
- Figur 19: eine bevorzugte Ausfiihrungsform des Befestigungseinlegers, wobei in dessen Schaft ein bevorzugter Drahtgewindeeinsatz mit auf Block gewickelten Windungen eingeformt ist,
- Figur 20: eine weitere bevorzugte Ausführungsform des Befestigungseinlegers, wobei in dessen Schaft ein bevorzugter Drahtgewindeeinsatz mit auf Block gewickelten Windungen eingeformt ist und die Einlegescheibe den Schaft verschließt,
- Figur 21: eine weitere bevorzugte Ausfuhrungsform des Befestigungseinlegers, wobei in dessen Schaft ein bevorzugter Drahtgewindeeinsatz mit auf Block gewickelten Windungen eingeformt ist und der Schaft bevorzugt zweiseitig über die Einlegescheibe vorsteht,
- Figur 22: ein Flussdiagramm einer bevorzugten Ausführungsform eines Herstellungsverfahrens für den Befestigungseinleger,

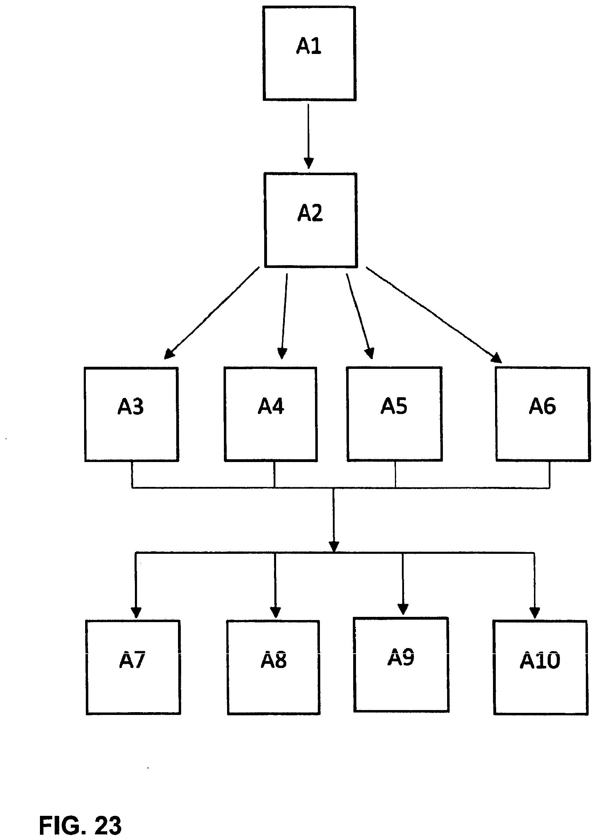

- Figur 23: ein Flussdiagramm eines weiteren bevorzugten Herstellungsverfahrens für den bevorzugten Befestigungseinleger, und
- Figur 24: ein Flussdiagramm einer bevorzugten Ausführungsform eines Herstellungsverfahrens für ein Bauteil mit eingebettetem Befestigungseinleger.

### 5. Detaillierte Beschreibung der bevorzugten Ausführungsformen

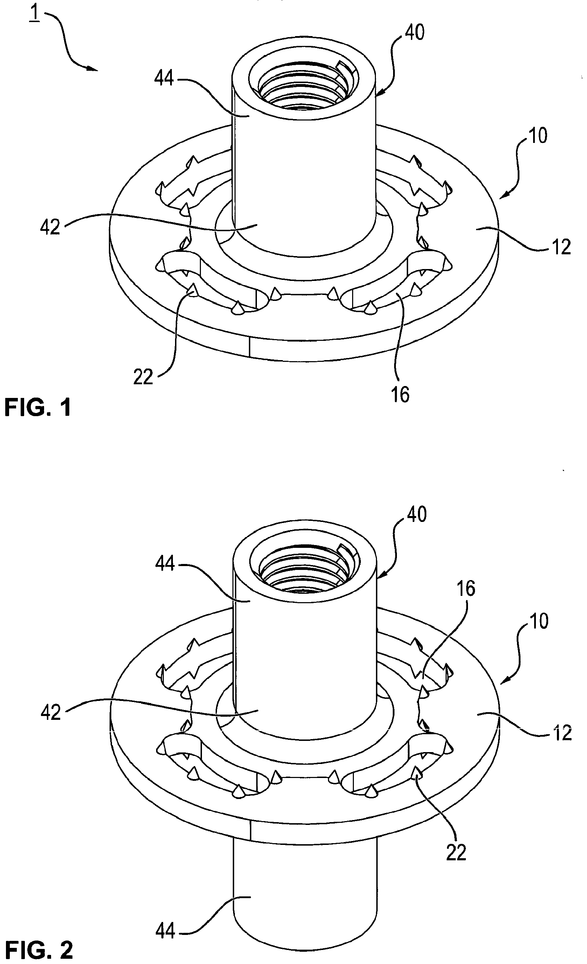

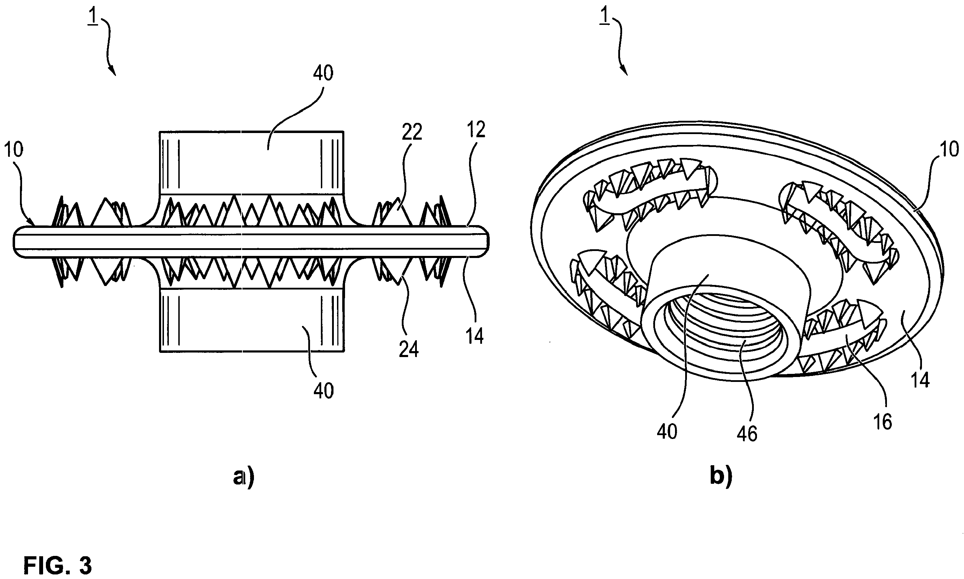

Figur 1 zeigt eine erste bevorzugte Ausführungsform des Befestigungseinlegers 1, der sich aus einer Einlegescheibe 10 und einem hohlzylindrischen Schaft 40 zusammensetzt. Der Schaft 40 weist einen Befestigungsabschnitt 42 auf, der mit der Einlegescheibe 10 fest verbunden ist. Zudem weist der Schaft 40 einen Funktionsabschnitt 44 auf, der sich einseitig (siehe Figur 1) oder beidseitig (siehe Figur 2 und 3) über die Einlegescheibe 10 hinaus erstreckt. Der Funktionsabschnitt 44 dient bevorzugt der Aufnahme und Befestigung einer metallischen Funktionsstruktur 60, wie oben näher erläutert ist.

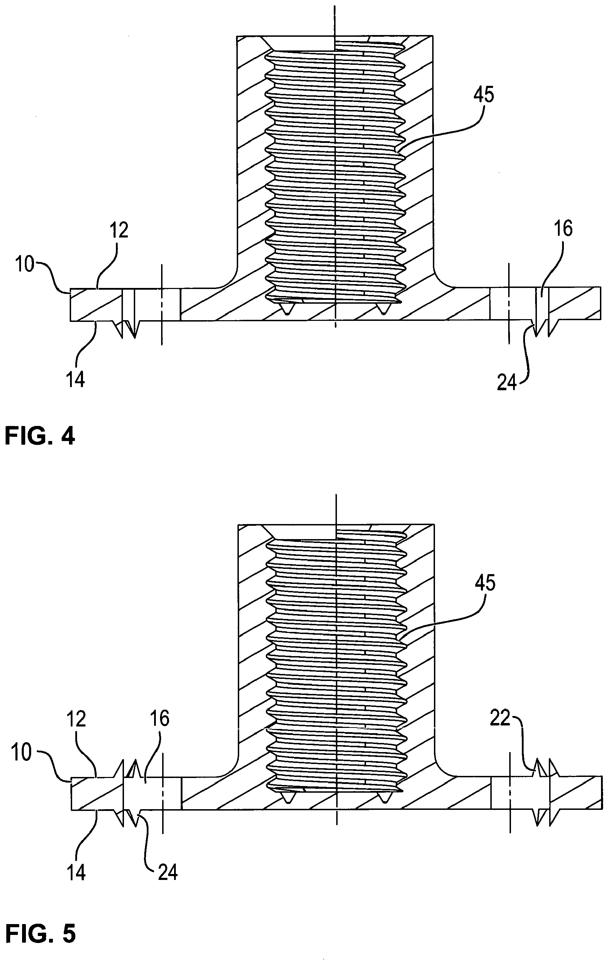

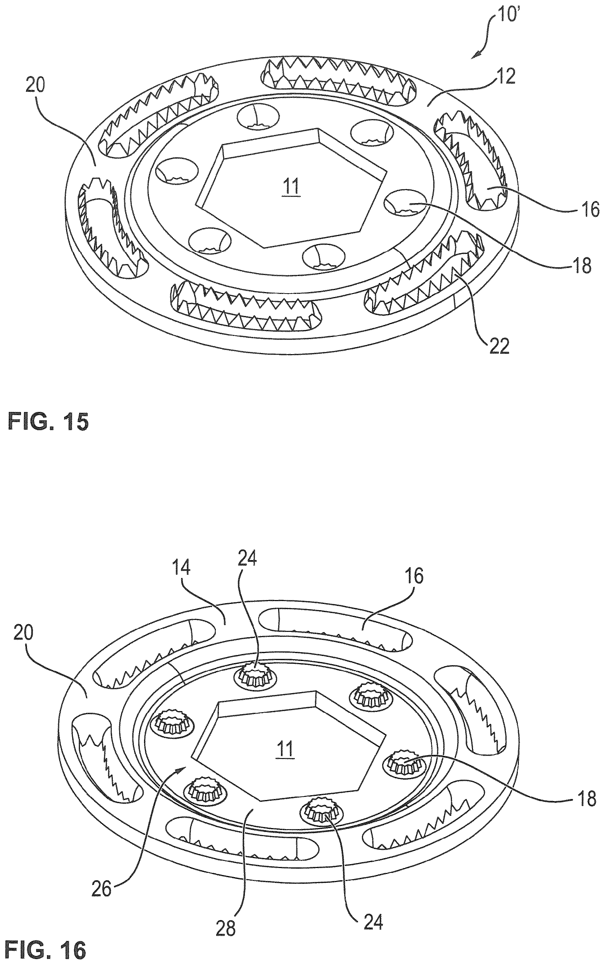

Wie man anhand der Schnittdarstellungen der Figuren 4 bis 8 erkennen kann, sind der Schaft 40 und die Einlegescheibe 10 bevorzugt einstückig ausgebildet. Es ist ebenfalls bevorzugt, die Einlegescheibe 10 und den Schaft 40 als getrennte Teile herzustellen und in einem bevorzugten Herstellungsverfahren des Befestigungseinlegers 1 miteinander zu verbinden. Eine bevorzugte Ausführungsform einer separaten Einlegescheibe 10 zeigen die Figuren 15 und 16.

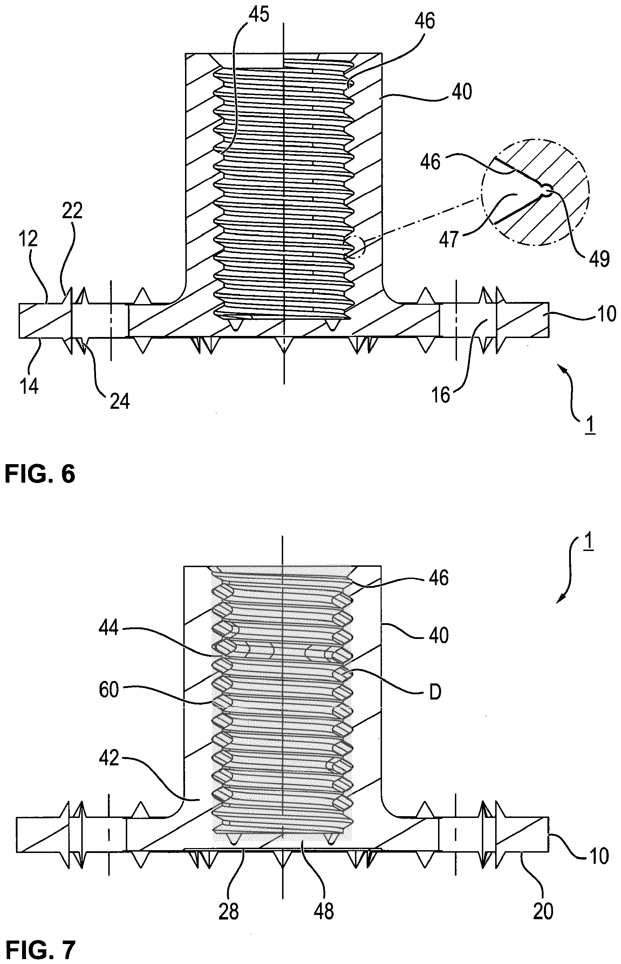

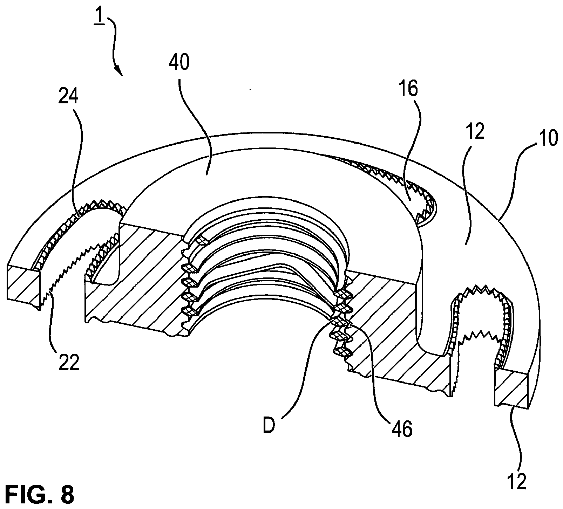

Des Weiteren ist in den Schnittdarstellungen der Figuren 7 und 8 exemplarisch die metallische Funktionsstruktur 60 zu erkennen. Die metallische Funktionsstruktur 60 ist bevorzugt ein Drahtgewindeeinsatz D zur Verstärkung eines Innengewindes 46 im Funktionsabschnitt 44. Die metallische Funktionsstruktur 60 erstreckt sich, wie man am Beispiel des Drahtgewindeeinsatzes D erkennen kann, nur im Inneren des hohlzylindrischen Schafts 40. Im Speziellen ist der Drahtgewindeeinsatz D beabstandet zu einem geschlossenen oder offenen axialen Ende 48 des Schafts 40 am Befestigungsabschnitt 42 im Inneren des Schafts 40 angeordnet.

Figur 7 zeigt eine bevorzugte Ausführungsform des Befestigungseinlegers 1, in dem das axiale Ende 48 des Schafts 40 geschlossen ausgebildet ist. Das axiale Ende 48 ist entweder geschlossen, weil der Schaft 40 in seinem Befestigungsbereich 42 keine Öffnung aufweist. Gemäß eines nicht erfindungsgemäßen Beispiels ist die Einlegescheibe 10 vollständig geschlossen ausgebildet und verschließt den Schaft 40. Aufgrund dieser Anordnung der metallischen Funktionsstruktur 60 im Inneren des Schafts 40 wird vermieden, dass ein direkter Kontakt zwischen der Funktionsstruktur 60 und einem Bauteilmaterial, in dem der Befestigungseinleger 1 eingebettet ist, stattfindet. Dies ist gerade bei einem Schaummaterial oder einem Verbundmaterial von Bedeutung, das mit einer

Kohlenstofffaserverstärkung ausgestattet ist. Denn ein derartiger Kontakt würde zu einer elektrochemischen Korrosion und somit zu einer nachteiligen Beeinflussung des Befestigungseinlegers 1 und des Bauteils führen.

Während der Drahtgewindeeinsatz D der Fig. 7 mit konstantem Windungsdurchmesser ausgebildet ist, weist der Drahtgewindeeinsatz D' in Fig. 8 eine verjüngte Windung auf. Diese verjüngte Windung klemmt eine eingeschraubte Schraube und bietet damit eine Sicherung für ein Verbindungselement.

Wie man anhand der Figuren 2 und 3 erkennen kann, erstreckt sich der Schaft 40 beidseitig über die Einlegescheibe 10 hinaus. Während ein einseitiger Schaft 40 (siehe Figur 1) nur eine einseitige Befestigungsmöglichkeit bereitstellt, liefert der beidseitige Schaft 40 eine zweiseitige Befestigungsmöglichkeit an einem Bauteil (nicht gezeigt).

Vorzugsweise wird der Befestigungseinleger 1 in einem Bauteil genutzt, welches aus Schaummaterial mit bevorzugter Faserverstärkung oder aus einem Verbundmaterial hergestellt ist. Es ist ebenfalls bevorzugt, das Bauteil aus mehreren Kunststoffschichten herzustellen. Bei der Bauteilherstellung realisiert gerade die Geometrie der Einlegescheibe 10 einen formschlüssigen Halt im Bauteilmaterial. Wird das Bauteil aus einem Verbundmaterial mit zumindest einer ersten und einer zweiten Materiallage hergestellt, dann sorgt auch hier die Konstruktion der Einlegescheibe 10 für zumindest einen formschlüssigen Halt im Bauteilmaterial während der Bauteilherstellung und im fertigen Bauteil.

Zu diesem Zweck weist die Einlegescheibe 10 eine erste 12 und eine zweite Befestigungsseite 14 auf. Diese Befestigungsseiten 12, 14 bilden jeweils Anlageflächen für benachbarte Materiallagen bei der Bauteilherstellung oder im späteren Bauteil. Die Einlegescheibe 10 weist eine Mehrzahl von außermittig um den Schaft 40 angeordneten Durchgangsöffnungen 16, 18 auf. Die Durchgangsöffnungen 16, 18 sind bevorzugt kreisförmig oder als Langlöcher ausgebildet. Dies ist anhand der Figuren 15, 16 erkennbar. Zwar zeigen die Figuren 15, 16 eine vom Schaft 40 getrennte Einlegescheibe 10'. Die hier dargestellten Geometriemerkmale gelten aber in gleicher Weise für eine fest mit dem Schaft 40 verbundene Einlegescheibe 10. Eine mit dem Schaft 40 verbundene Einlegescheibe 10 und bevorzugten Langlöchern 16 zeigt Fig. 3.

Gemäß einer ersten bevorzugten Ausführungsform weist die Einlegescheibe 10, 10' einen ringförmigen radialen Außenbereich 20 auf, in dem eine Mehrzahl von Öffnungen 16 angeordnet ist. Diese Öffnungen 16 sind vorzugsweise gleichmäßig voneinander beabstandet und kreisförmig und/oder als Langloch geformt.

Gemäß unterschiedlicher bevorzugter Ausführungsformen vorliegender Erfindung weist jedes oder eine Auswahl der Löcher 16 einen umlaufenden Randvorsprung auf, der als Verzahnung 22, 24 ausgebildet ist. Gemäß einer bevorzugten Ausführungsform weist die Einlegescheibe 10 nur eine einseitige Verzahnung auf. In diesem Fall erstreckt sich nur die Verzahnung 22 einseitig über die Befestigungsseite 12 hinaus (siehe Figur 15). Gemäß einer anderen bevorzugten Ausführungsform vorliegender Erfindung erstreckt sich nur die Verzahnung 24 einseitig über die Befestigungsseite 14 hinaus (siehe Figur 4). Es ist ebenfalls bevorzugt, dass in einer Einlegescheibe 10 die Verzahnung 22, 24 gleichzeitig über beide Befestigungsseiten 12, 14 vorsteht, wie es in Fig. 3 zu sehen ist. Die Öffnungen 16 ermöglichen und unterstützen, dass sich an den benachbarten Befestigungsseiten 12, 14 angeordnete Materiallagen (nicht gezeigt) mittels Harz, flüssigem Kunststoff oder einem ähnlich aushärtbaren Medium vernetzen und verbinden. Zudem dienen die radial außen in der Einlegescheibe 10 angeordneten Öffnungen 16 einer bevorzugten Vorfixierung des Befestigungseinlegers 1 mittels Annähen an eine Faser-, Gewebe-, Vlies- oder Materiallage.

Die Verzahnung 22, 24 dient dazu, eine formschlüssig Vorfixierung mit einer ersten Materiallage angrenzend an die Befestigungsseite 14 und/oder die Befestigungsseite 12 herzustellen. Dazu greift die entsprechende Verzahnung 22, 24 in die angrenzende Materiallage ein und verhindert ein laterales Versetzen des positionierten Befestigungseinlegers 1. In diesem Zusammenhang ist es von besonderem Vorteil, wenn die Verzahnung 22, 24 in eine Faserlage, ein Gewebe, ein Gestrick, ein Gelege, einen Gewebekomplex, ein Geflecht, eine Matte, ein Vlies, eine Filzmatte oder eine ähnlich verstärkte Materiallage eingreift, da die Verzahnung 22, 24 dort guten Halt findet.

Gemäß einer bevorzugten Ausführungsform, die in Figur 6 dargestellt ist, weist die erste Mehrzahl von Öffnungen 16 im radialen Außenbereich 20 eine sich beidseitig erstreckende Verzahnung 22, 24 auf. Gemäß einer weiteren bevorzugten Ausführungsform des Befestigungseinlegers 10 in Fig. 7, 15 und 16 ist der ringartige radiale Außenbereich 20 in einer Ebene angeordnet. Aus dieser Ebene heraus wölbt sich ein Zentralbereich 26 der Einlegescheibe 10. Dadurch entsteht eine konkave Vertiefung oder Senke 28. Die Vertiefung 28 wölbt sich in Richtung des Funktionsabschnitts 44 des Schafts 40.

Wie anhand der Figuren 7 und 16 zu erkennen ist, ist die Senke 28 bevorzugt unterschiedlich groß ausgebildet. Gemäß einer Anwendungsalternative dient die Senke 28 der Aufnahme eines Klebstoffs, um den Befestigungseinleger 1 auf einer Materiallage angrenzend an die Befestigungsseite 14 vorfixieren zu können. Dazu wird die Senke 28 zumindest teilweise mit Klebstoff gefüllt. Nach dem Aufsetzen der Befestigungsseite 14 auf der Materiallage sorgt der um die Senke 28 umlaufende Außenring 20 dafür, dass möglichst kein Klebstoff in die Öffnungen 16 dringt. Der Klebstoff wird nachfolgend aktiviert und/oder ausgehärtet, um den Befestigungseinleger 1 auf der Materiallage vorzufixieren. Das Aktivieren und Aushärten des Klebstoffs erfolgt bevorzugt mittels Licht. Zu diesem Zweck besteht die Einlegescheibe 10 aus einem transparenten oder mittels Licht durchstrahlbaren Kunststoff. Entsprechend wird mit einer auf den Klebstoff abgestimmten Wellenlänge durch die Einlegescheibe 10 hindurch auf den Klebstoff Licht eingestrahlt und die Verbindung zur Vorfixierung hergestellt.

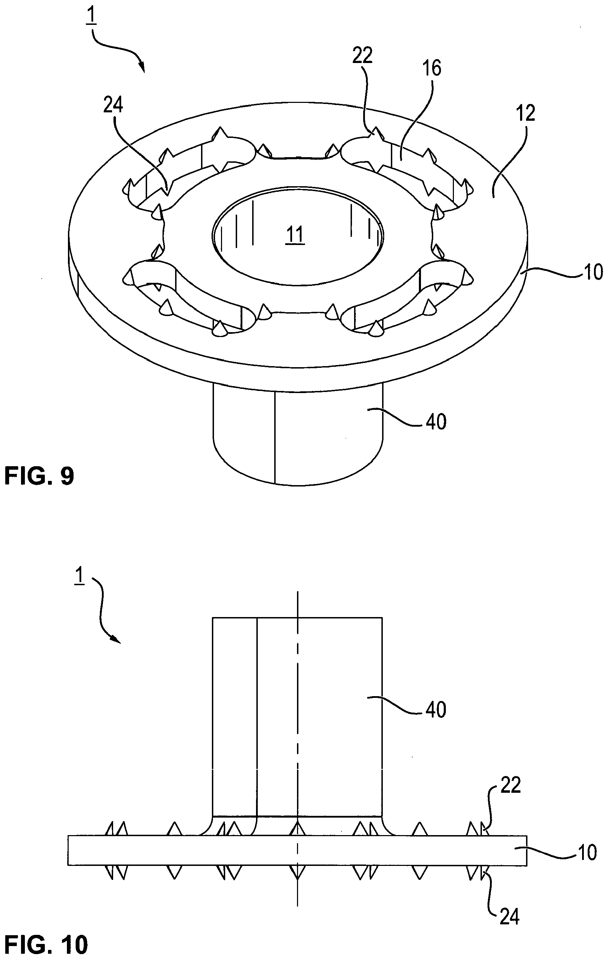

Der Klebstoff wird vorzugsweise in einem ringförmigen Volumen oder Bereich aufgenommen, der sich um die zentrale Öffnung 11 der Einlegescheibe 10 erstreckt. Die Öffnung 11 kann auch direkt in den Schaft 40 münden (Fig. 9), durch diesen verschlossen sein oder selbst durch die Einlegescheibe 10 verschlossen sein (Fig. 6).

Gemäß einer bevorzugten Ausführungsform vorliegender Erfindung erstreckt sich in den gewölbten Zentralbereich 26 ein radial innen liegender Ringsteg. Dieser Ringsteg endet in axialer Richtung gemeinsam mit dem radialen Außenbereich 20. Auf diese Weise wird zwischen dem Ringsteg und dem radialen Außenbereich 20 ein Ringvolumen des gewölbten Zentralbereichs 26 definiert, in dem vorzugsweise Klebstoff aufgenommen wird. Gemäß einer Ausgestaltung vorliegender Erfindung wird der Ringsteg durch das Befestigungsende 42 des Schafts gebildet, das sich bis auf die axiale Höhe des radialen Außenbereichs 20 in die Wölbung des Zentralbereichs 26 erstreckt.

Gemäß einer weiteren bevorzugten Ausführungsform vorliegender Erfindung weist die Einlegescheibe 10 eine zweite Mehrzahl von kreisförmigen oder langlochähnlichen Öffnungen 18 auf. Diese sind bevorzugt im Zentralbereich 26 angeordnet, unabhängig davon, ob der Zentralbereich 26 eine gewölbte Vertiefung 28 aufweist oder nicht. Diese Öffnungen 18 umfassen ebenfalls eine einseitig oder beidseitig vorstehende Verzahnung 22, 24. Da die Öffnungen 18 im Zentralbereich 26 vorgesehen sind, dienen sie ebenfalls dem Verbund benachbarter Materiallagen. Zudem greift die in die Wölbung ragende Verzahnung 24 bevorzugt in den vorfixierenden Klebstoff ein. Dadurch wird der Halt des Befestigungseinlegers 1 unterstützt. Zudem unterstützt bevorzugt die Verzahnung 22 eine Positionssicherung bei der Bauteilherstellung, indem sie in die benachbarte Materiallage oder Faserlage eingreift.

Wie bereits oben erläutert worden ist, ist der Schaft 40 bevorzugt in Form eines Hohlzylinders vorgesehen. Dieser Hohlzylinder erstreckt sich einseitig über die Einlegescheibe 10 hinaus. Des Weiteren ist es vorteilhaft, den Schaft 40 in einer zentralen unrunden Öffnung 11 der Einlegescheibe 10 mit einem an die Form angepassten Befestigungsende 42 anzuordnen. Die Kombination der unrunden Öffnung 11 und des unrunden Befestigungsendes 42 stellen eine Verdrehsicherung zwischen Einlegescheibe 10 und Schaft 40 bereit (Fig. 15).

Gemäß einer weiteren bevorzugten Ausfuhrungsform vorliegender Erfindung umfasst der Schaft 40 an einer radialen Außenseite radial vorstehende Verankerungsmerkmale, wie beispielsweise Stege, Schuppen oder eine andere geeignete Profilierung. Diese Verankerungsmerkmale greifen bei der Bauteilherstellung in das umgebende Bauteilmaterial ein und dienen somit dem zusätzlichen Befestigen des Befestigungseinlegers 1 im Bauteilmaterial.

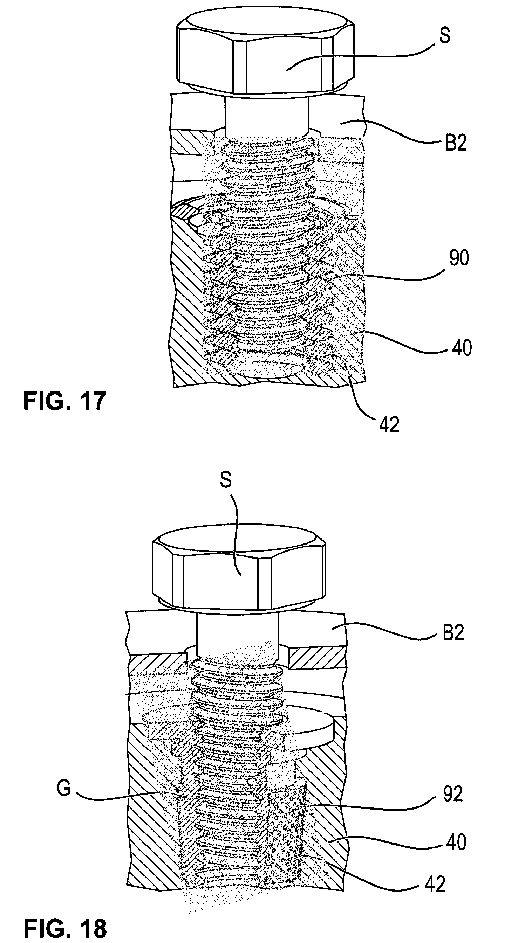

Gemäß einer weiteren Ausgestaltung vorliegender Erfindung umfasst der hohlzylindrische Schaft 40 die metallische Funktionsstruktur 60 an der radialen Innenseite 45. Die Funktionsstruktur 60 ist an der Innenseite 45 reibschlüssig verankert, wie vorzugsweise der Drahtgewindeeinsatz D, der im Innengewinde 46 angeordnet ist (Fig. 7, 8). Weiterhin bevorzugt ist ein Gewindeeinsatz G in die Innenseite 45 des Schafts 40 eingeformt oder ebenfalls in dieser Innenseite reibschlüssig und/oder formschlüssig verankert (siehe Fig. 18). Bevorzugte Ausführungsformen sind zudem ein auf Block gewickelter Drahtgewindeeinsatz 90, der in die Innenseite 45 eingeformt worden ist (siehe Fig. 17). Eine andere Ausführungsform ist ein metallischer Gewindeeinsatz 94, der mittels thermischem Einbettverfahren in die Innenseite 45 eingebettet worden ist. Die Figuren 17, 18 zeigen zudem eine Schraube S, über die ein zweites Bauteil B2 mit dem Befestigungseinleger 1,;1' des ersten Bauteils verbunden ist. Es ist ebenfalls bevorzugt, dem Gewindeeinsatz 92 über ein selbstschneidendes Außengewinde in den Schaft 40 einzuschrauben, bei einer rauen Außenfläche des Gewindeeinsatzes 92 diesen einzukleben oder bei einer federnden Konfiguration des Gewindeeinsatzes 92 diesen im Schaft 40 einzuklemmen.

Bezug nehmend auf den in Figur 7 gezeigten Drahtgewindeeinsatz D als Funktionsstruktur 60 ist es ebenfalls bevorzugt, wenn dieser Windungen aufweist, die sich über den Schaft 40 hinaus erstrecken. Diese Windungen ragen abgewandt von der Einlegescheibe 10 aus dem Schaft 40 heraus. Zudem ist mindestens eine dieser Windungen im Vergleich zu den übrigen Windungen mit einem geringeren Querschnitt ausgebildet (siehe auch Fig. 8). Wird eine Schraube S in diese kleinere Windung eingeschraubt, klemmt sie die Schraube S fest und sorgt für eine Schraubensicherung.

Das Innengewinde 46 nimmt die mechanische Spannung auf, die vom Drahtgewindeeinsatz D auf den Schaft 40 übertragen wird. Da spitz zulaufende Gewindevertiefungen 47 für eine mechanische Spannungskonzentration im Schaft 40 sorgen, wurden die Gewindevertiefungen 47 mit kontinuierlichen oder abschnittsweise umlaufenden Freimachungen 49 abgestumpft (siehe Fig. 6). Auf diese Weise wird die Materialbelastung im Schaft 40 reduziert und ein Halt des Drahtgewindeeinsatzes D unterstützt.

Im Vergleich zur Anordnung der Figur 6 ist ein auf Block gewickelter Drahtgewindeeinsatz 90 direkt in die Innenseite 45 des Schafts 40 eingeformt oder eingebettet (siehe Fig. 17). Durch die hier vorliegende formschlüssige Verbindung, die auch für einen eingeformten metallischen Gewindeeinsatz G (Fig. 18) oder einen metallischen Verbindungseinsatz gilt, werden belastende mechanische Spannungen vom Gewindeeinsatz G direkt in das einbettende Schaftmaterial abgeleitet.

Ausgehend von den oben beschriebenen bevorzugten Ausführungsformen des Befestigungseinlegers 1; 1' ist dieser angepasst, um in einem Bauteil eingebettet zu sein. Dies schafft die Grundlage für eine Verbindung mit einem weiteren Bauteil B2. Dazu wird bevorzugt ein Verbindungsmittel, vorzugsweise eine Schraube S, durch eine Öffnung im zweiten Bauteil B2 in den Befestigungseinleger 1; 1' eingeschraubt oder darin befestigt, um die Verbindung zwischen dem ersten und dem zweiten Bauteil B2 herzustellen (siehe Fig. 17, 18).

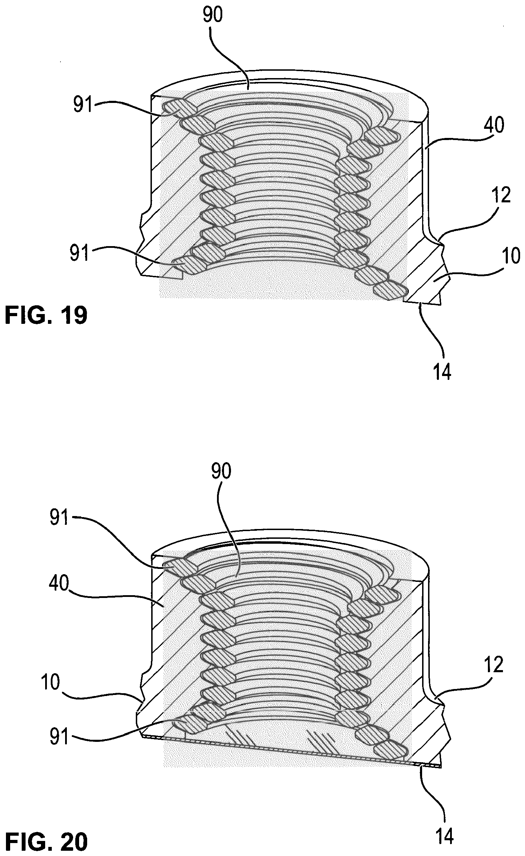

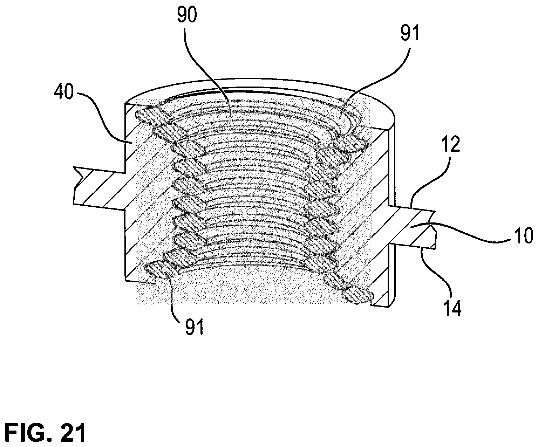

Eine weitere bevorzugte Ausführungsform des Befestigungseinlegers 1; 1' zeigen die Fig. 19 bis 21. Im Schaft 40 des Befestigungseinlegers 1; 1' der Fig. 17 ist ein auf Block gewickelter Drahtgewindeeinsatz 90 mit nur einem Befestigungsflansch 91 an einer axialen Seite des Drahtgewindeeinsatzes 90 und des Schafts 40 angeordnet. In weiterer Ausgestaltung dieser vorteilhaften Konstruktion weist der Befestigungseinleger 1; 1' der Fig. 19 bis 21 an beiden axialen Stirnseiten oder Enden jeweils einen Befestigungsflansch 91 auf. Der Befestigungsflansch 91, egal ob einseitig oder zweiseitig vorgesehen, unterstützt einen sicheren Halt des Drahtgewindeeinsatzes 90 im Schaft 40. Zudem stabilisiert und schützt der Befestigungsflansch 91 jeweils die angrenzende Einschrauböffnung für eine Schraube S in den Schaft 40 vor Beschädigung und leitet mechanische Befestigungsspannungen der Schaube S in das Schaftmaterial ab. Die bevorzugte Ausführungsform gemäß Fig. 19 nutzt jeweils einen Befestigungsflansch 91 an den Öffnungen des Schafts 40. Gemäß einer Konstruktionsalternative ist es bevorzugt, die Befestigungsseite 14 bündig mit einer Bauteilwand anzuordnen.

Gemäß einer anderen Konstruktionsalternative wird die Einlegescheibe 10 der Fig. 19 in ein Bauteilmaterial eingebettet. Um einen möglichen Kontakt mit einer Verstärkungsfaser zu vermeiden, ist es weiterhin bevorzugt, die Öffnung des Schafts 40 angrenzend an die Einlegescheibe 10 zu verschließen. Dazu ist gemäß einer Ausgestaltung die Einlegescheibe 10 durchgehend ausgebildet, wie es Fig. 20 zeigt. Alternativ dazu wird die Öffnung des Schafts 40 angrenzend an die Einlegescheibe 10 mit einer Folie, einer kleinflächigen Zwischenschicht oder dergleichen abgedeckt, um einen Kontakt mit bspw. Kohlenstofffasern auszuschließen.

Gemäß einer weiteren bevorzugten Ausführungsform des Befestigungseinlegers 1; 1' ist der Schaft 40 in Bezug auf die Einlegescheibe 10 zweiseitig ausgebildet. Er erstreckt sich an beiden Befestigungsseiten 12, 14 über diese hinaus. In die Innenseite des Schafts 40 ist ebenfalls bevorzugt der auf Block gewickelte Drahtgewindeeinsatz 90 eingeformt. Dieser weist an jedem axialen Ende einen Befestigungsflansch 91 auf, wobei auch nur ein Befestigungsflansch 91 oder ein anderer Gewindeeinsatz 92 genutzt werden könnten. Diese bevorzugte Konstruktion des Befestigungseinlegers 1; 1' stellt eine zweiseitige Verbindungsmöglichkeit an einem Bauteil mit diesem eingebetteten Befestigungseinleger 1; 1' bereit. Zudem ist es bevorzugt, mit Hilfe dieses Befestigungseinlegers 1; 1' ein Verbindungsmittel, bspw. die Schraube S, durch ein Bauteil mit diesem eingebetteten Befestigungseinleger 1; 1' hindurch zu schrauben.

Der Befestigungseinleger 1; 1' ist im ersten Bauteil aus Schaummaterial, aus Kunststoff oder aus Verbundmaterial fest angeordnet. Vorzugsweise besteht das Bauteil aus einem Struktur- oder Integralschaum, der einen verstärkenden Faseranteil aufweist. Entsprechend ist der Befestigungseinleger 1; 1' in diesem bevorzugten Schaummaterial eingeschäumt. Verstärkungsfasern sind Glasfasern, Kohlenstofffasern oder Aramidfasern. Dabei sind Kohlenstofffasern aufgrund des mechanischen Festigkeitsgewinns des Schaummaterials bevorzugt.

Weiterhin bevorzugt besteht das Bauteil aus einem Verbundmaterial mit mindestens einem darin eingebetteten Befestigungseinleger 1; 1'. Gemäß einer Ausführungsform besteht das Bauteilmaterial aus einem Gewebe, einem Vlies oder einem Filz und einer Polymermatrix. Eine passende Polymermatrix wird durch bekannte Epoxid- oder Cyanat-Harze gebildet, mit der das Gewebe, das Vlies oder der Filz getränkt und dann ausgehärtet wird. Erfindungsgemäß bevorzugt werden Kohlenstofffasern in Kombination mit einer Polymermatrix verwendet, weil sie im Vergleich zu anderen Faserwerkstoffen am vorteilhaftesten die mechanischen Eigenschaften des Bauteils verbessern. Je nach Bauteilanwendung werden die Kohlenstofffasern in unterschiedlichen Faserkonfigurationen als Kurzfaser, Langfaser, Matten mit ungeordneten Fasern, als Gewebe, Gestrick, Gelege, Gewebekomplexe oder als Geflecht in der Harz- oder allgemein in der Polymermatrix verarbeitet. Entsprechend wird bevorzugt eine oder mehrere der oben genannten Faserformen als Laminat, als Prepreg oder auf andere bekannte Weise bereitgestellt, mit Harz getränkt und anschließend ausgehärtet oder ohne Tränken ausgehärtet. Daher liegt das Bauteil dann als Verbundmaterial mit einer verstärkenden Kohlenstofffaser gemäß einer oder mehreren der obigen Faserkonfigurationen vor.

Gemäß einer weiteren Ausführungsform vorliegender Erfindung wird der Befestigungseinleger 1; 1' in einem Organoblech eingespritzt bzw. zu einem Organoblech umspritzt.

Da der Befestigungseinleger 1; 1' im Verbundmaterial eingebettet ist, wird eine über ein Verbindungselement in den Schaft 40 eingeleitete mechanische Last über die Einlegescheibe 10 an das Bauteil abgegeben bzw. in das Bauteilmaterial abgeleitet. Dabei ist von Vorteil, dass die Einlegescheibe 10 eine großflächige, doppelseitige Verbindung im Bauteilmaterial herstellt. Da das Harz oder die Polymermatrix während der Bauteilherstellung die Öffnungen 16, 18 der Einlegescheibe 10 durchflutet und dort aushärtet, wird der Befestigungseinleger 1; 1' über eine formschlüssige und stoffschlüssige Verbindung im Bauteilmaterial eingebettet. Ergänzend dazu stellt die einseitige oder zweiseitige Verzahnung 22, 24 eine zusätzliche formschlüssige Verbindung zu den benachbarten Faserlagen oder Metalllagen während der Bauteilherstellung und zu den benachbarten Materiallagen im späteren Verbundmaterial bereit. Diese weitere Verankerung im Bauteilmaterial sorgt für zusätzliche Stabilität und Lebensdauer der Verbindung aus Bauteil und Befestigungseinleger 1; 1'.

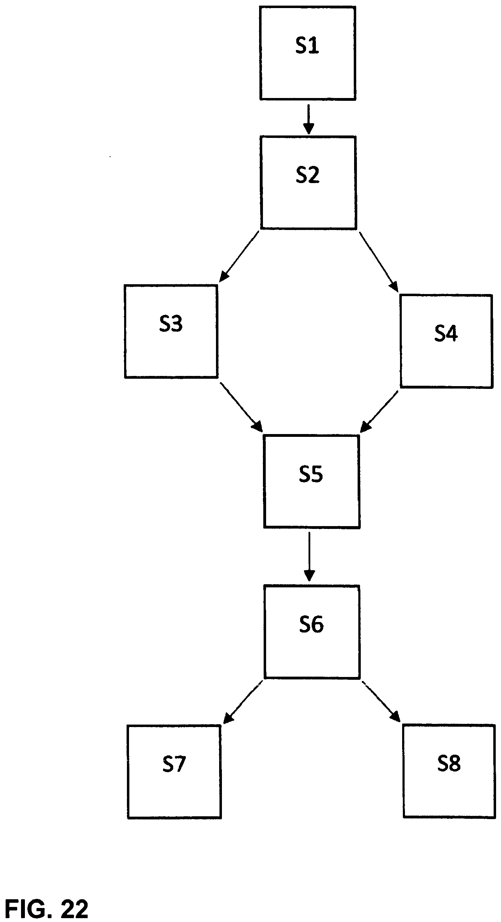

Vorliegende Erfindung offenbart zudem ein Herstellungsverfahren für den oben beschriebenen T-förmigen Befestigungseinleger 1; 1'. Im Folgenden sollen auch parallel Bezug nehmend auf das Flussdiagramm in Figur 22 die einzelnen Schritte des Herstellungsverfahrens erläutert werden. Zunächst wird im Schritt S1 eine Spritzgussform bereitgestellt, deren Formhohlraum in komplementärer Form die strukturellen Merkmale des Befestigungseinlegers 1;1' vorgibt. Gemäß einer bevorzugten Ausführungsform vorliegender Erfindung definiert die Spritzgussform die oben bereits beschriebene Einlegescheibe 10. Diese weist die zwei einander gegenüberliegend angeordneten Befestigungsseiten 12, 14 mit den mehreren Durchgangsöffnungen 16, 18 auf. Zudem sind an diesen Öffnungen vollständig umlaufende oder abschnittsweise umlaufende Verzahnungen 22, 24 ausgebildet, die einseitig oder beidseitig über die jeweils angrenzende Befestigungsseite 12, 18 hinaus ragen.

In Abhängigkeit davon, welche Konstruktion des Befestigungseinlegers 1; 1' hergestellt werden soll, wird beispielsweise ein Kern in die Spritzgussform eingelegt bzw. gibt eine Formgestaltung der Spritzgussform die Innengestaltung der Innenseite 45 des Schafts 40 vor. So weist der Kern vorzugsweise die Form eines Gewindes auf, welches dann beim Füllen des Formhohlraums mit Kunststoff das Innengewinde 46 an der radialen Innenwand des Schafts 40 definiert. In gleicher Weise, wie das Innengewinde 46 bereits während der Herstellung des Befestigungseinlegers 1; 1' erzeugt wird, wird gemäß weiterer bevorzugter Alternativen des Herstellungsverfahrens ein Drahtgewindeeinsatz 90 oder ein Gewindeeinsatz 92 oder ein Verbindungseinsatz im Formhohlraum in Schritt S2 positioniert. Erst nachdem diese einzuformenden metallischen Funktionsstrukturen 60 im Formhohlraum angeordnet bzw. positioniert worden sind, wird der Formhohlraum mit Kunststoff gefüllt. Auf diese Weise erfolgt ein Einformen des Drahtgewindeeinsatzes 90 oder des Gewindeeinsatzes 92 oder des Verbindungseinsatzes beim Füllen des Formhohlraums mit flüssigem Kunststoff (S3, S4).

Das Füllen des Formhohlraums mit mindestens einem fließenden Kunststoff S3, S4 ist ebenfalls gemäß unterschiedlich bevorzugter Herstellungsrouten durchführbar. Denn in Abhängigkeit von den mechanischen Belastungen, die der spätere Befestigungseinleger 1; 1' aushalten muss, können unterschiedliche Kunststoffe oder unterschiedliche Faserverstärkungsgrade oder -anteile für beispielsweise die Ausformung der Einlegescheibe 10 und des Schafts 40 gewählt werden. Entsprechend wird der Befestigungseinleger 1; 1' ganz generell in einem 1K-Spritzgussverfahren hergestellt, bei dem nur ein Kunststoff für die Herstellung des kompletten Befestigungseinlegers 1; 1' verwendet wird. Alternativ dazu wird ein 2K-Spritzgussverfahren genutzt, bei dem zwei unterschiedliche Kunststoffe die Einlegescheibe 10 einerseits und den Schaft 40 andererseits bilden. Daher ist es im Schritt S3 bevorzugt, den Formhohlraum mit nur einem Kunststoff zu füllen, sodass der Befestigungseinleger 1; 1' und im Speziellen die Einlegescheibe 10 und der Schaft 40 stoffgleich hergestellt werden. Alternativ dazu ist es bevorzugt, den Formhohlraum im Bereich der auszuformenden Einlegescheibe 10 mit einem ersten Kunststoff und im Bereich des Schafts 40 mit einem zweiten Kunststoff zu füllen, sodass der Befestigungseinleger 1; 1' in einem 2K-Spritzgussverfahren hergestellt wird (Schritt S4).

Während also die Wahl der Kunststoffe für die Einlegescheibe 10 und den Schaft 40 bereits unterschiedlich ausfallen kann, ist es ebenfalls bevorzugt, die Anteile an Verstärkungsfasern und die Art und Konfiguration der Verstärkungsfasern in den eingesetzten Kunststoffen zu variieren. Entsprechend ergeben sich für die Herstellung des Befestigungseinlegers 1; 1' im 2K-Spritzgussverfahren die folgenden Herstellungsrouten.

Gemäß einer ersten Ausführungsform sind der verwendete erste und der zweite Kunststoff gleich, wobei sich aber die Anteile an Verstärkungsfasern in dem für die Einlegescheibe 10 und den Schaft 40 verwendeten Kunststoff unterscheiden. Gemäß einer weiteren bevorzugten Ausführungsform vorliegender Erfindung ist eine chemische Zusammensetzung des ersten und des zweiten Kunststoffs unterschiedlich. Gemäß einer dritten Verfahrensalternative ist eine chemische Zusammensetzung des ersten und des zweiten Kunststoffs unterschiedlich und es werden zudem unterschiedliche Anteile an Verstärkungsfasern im ersten und im zweiten Kunststoff eingesetzt. Diese Gestaltungsmöglichkeiten eröffnen eine optimale Anpassung der mechanischen Eigenschaften der Einlegescheibe 10 und des Schafts 40 an die jeweilige Bauteilsituation.

Im Rahmen des oben beschriebenen Herstellungsverfahrens muss natürlich auch bevorzugt beachtet werden, dass die Einlegescheibe 10 aus einem transparenten oder zumindest mit Licht durchstrahlbaren Kunststoff hergestellt wird. Denn nur diese konstruktive Ausgestaltung des Befestigungseinlegers 1; 1' eröffnet die Möglichkeit, dass der Befestigungseinleger 1; 1' bei der späteren Bauteilherstellung auf einer Materiallage oder einer Faserlage mithilfe von lichtaushärtendem Klebstoff vorfixiert wird (siehe oben).

Für den Befestigungseinleger 1; 1' werden zunächst unabhängig von der Herstellungsroute des Befestigungseinlegers 1; 1' Kunststoffe ausgewählt, die die mechanischen, chemischen und thermischen Anforderungen des jeweiligen Anwendungsfalls erfüllen. Dabei sind faserverstärkte Kunststoffe besonders bevorzugt, die Glasfasern, Kohlenstofffasern, Aramidfasern und/oder textile Fasern oder Faserkombinationen oder faserähnliche Konfigurationen aufweisen. Besonders bevorzugt sind Kunststoffe, die mit Kohlenstofffasern (CFK) verstärkt sind, sofern der Schaft 40 nicht mit einer metallischen Funktionsstruktur 60 kombiniert wird. Bei einer Kombination mit der Funktionsstruktur 60 werden bevorzugt alle Nicht-Kohlenstofffasern eingesetzt. Eine Auswahl an Beispielen von Kunststoffen mit und ohne einer der oben genannten Faserverstärkung sind PE, PA, PP, PS, PVC, POM, PMMA, PC, PBT, EP, PPS, PSU und PTFE.

Im Hinblick auf die Einlegescheibe 10 wird gemäß einer bevorzugten Ausführungsform als Material PSU verwendet. PSU ist ein transparenter oder zumindest mit Licht durchstrahlbarer Kunststoff. Die optischen Eigenschaften verändern sich mit dem Anteil an Verstärkungsfasern im Material. Vorzugsweise wird PSU in Kombination mit einer Glasfaserverstärkung verwendet. Gemäß einer bevorzugten Ausführungsform sind Schaft 40 und Einlegescheibe 10; 10' aus PSU ohne Faserverstärkung hergestellt. Gemäß einer anderen Ausführungsform besteht der Schaft 40 aus PSU mit bis zu 60 % Glasfaserverstärkung. Da bei diesem hohen Anteil an Glasfaserverstärkung PSU nicht mehr transparent und durchstrahlbar ist, wird die passende Einlegescheibe 10; 10' vorzugsweise aus PSU ohne Glasfaserverstärkung oder mit einem Anteil kleiner 60 % an Glasfaserverstärkung für die Einlegescheibe 10; 10' verwendet. Da die verwendeten Kunststoffe für Schaft 40 und Einlegescheibe 10; 10' die gleiche Zusammensetzung aufweisen, lassen sie sich gut mittels reibschweißen oder anderer thermischer Verfahren verbinden.

Nachdem der Befestigungseinleger 1; 1' mithilfe eines der bevorzugten Spritzgussverfahren hergestellt worden ist, wird im weiteren Schritt S7 der Drahtgewindeeinsatz D in dem Innengewinde 46 der radialen Innenseite 45 des Schafts 40 installiert. Dieser Installationsschritt findet nach dem Entformen des Befestigungseinlegers aus der Bauteilform statt.

Alternativ zur Installation des Drahtgewindeeinsatzes D wird nach dem Entformen des Befestigungseinlegers 1; 1' der Gewindeeinsatz 92 oder der Verbindungseinsatz über ein thermisches oder ein mechanisches Verfahren im Schaft 40 installiert. Zu dem bevorzugten thermischen Einbettverfahren zählt beispielsweise das Heizelement-Schweißverfahren. Dabei wird über ein Heizelement Kontaktwärme auf die metallische Funktionsstruktur 60 übertragen. Von der metallischen Funktionsstruktur 60 überträgt sich diese Wärme auf die Fügezone des Kunststoffs, also auf die Innenseite des Schafts 40. Während des Aufschmelzens des Kunststoffs des Schafts 40 im Bereich der Kontaktfläche, also zwischen der Innenseite 45 und der Außenseite der Funktionsstruktur 60, findet der Fügeprozess statt. Dabei wird der plastifizierte Kunststoff in eine an der radialen Außenseite der Funktionsstruktur 60 vorhandene Profilierung bzw. Strukturierung verdrängt, sodass eine formschlüssige Verbindung entsteht.

Alternativ ist es ebenfalls bevorzugt, die metallische Funktionsstruktur über ein elektromagnetisches Wechselfeld berührungslos zu erwärmen. Auch hier plastifiziert der Kunststoff an der Kontaktfläche zwischen Funktionsstruktur 60 und Innenseite 45 des Schafts 40 und wird dann in die äußere Struktur der Funktionsstruktur 60 eingeformt. Eine weitere bevorzugte Alternative stellt das Ultraschallschweißen da, bei der der Kunststoff des Schafts 40 durch Schwingungsabsorption plastifiziert und dann in die Außenseite der Funktionsstruktur 60 eingeformt wird.

Zu den oben genannten mechanischen Verfahren zum Installieren einer Funktionsstruktur 60 im Schaft 40 zählt beispielsweise das Eindrehen oder Einklemmen eines Gewindeeinsatzes oder einer ähnlichen Konstruktion im Schaft 40.

Da das Installieren der Funktionsstruktur 60 nicht an den Herstellungsprozess des Befestigungseinlegers gebunden ist, kann dieser Schritt zeitlich später und losgelöst von der Herstellung erfolgen. Dies eröffnet die Möglichkeit, dass die Installation durch den Hersteller des Befestigungseinlegers 1;1' in gleicher Weise wie durch dessen Abnehmer erfolgen kann. Zudem kann die Installation im separaten Befestigungseinlegers 1;1' oder in einem im Bauteil eingebetteten Befestigungseinleger 1; 1' stattfinden.

In einem weiteren Herstellungsverfahren für den T-förmigen Befestigungseinleger 1; 1' wird zunächst im Schritt A1 die Einlegescheibe 10 des Befestigungseinlegers aus Kunststoff bereitgestellt. Gemäß einer bevorzugten Ausfuhrungsform vorliegender Erfindung, die oben bereits beschrieben worden ist, besteht die Einlegescheibe 10 aus transparentem oder mit Licht durchstrahlbarem Kunststoff, um während der Bauteilherstellung eine Vorfixierung des Befestigungseinlegers 1; 1' vornehmen zu können. Die Einlegescheibe 10 weist die einander gegenüberliegend angeordneten Befestigungsseiten 12, 14 mit mehreren außermittig um den Schaft 40 angeordneten Durchgangsöffnungen 16, 18 auf.

In einem zweiten Schritt A2 wird der Schaft 40 des Befestigungseinlegers 1; 1' bereitgestellt. Da der Befestigungseinleger 1; 1' nicht in einem zusammenhängenden Spritzgussverfahren hergestellt wird, erfolgt nun ein Verbinden der Einlegescheibe 10 und des Schafts 40 mithilfe unterschiedlicher Verfahren. Gemäß einer Verfahrensroute wird der Schaft 40 in eine zentrale Öffnung 11 der Einlegescheibe 10 mechanisch geklemmt oder darin verrastet. Vorzugsweise weist diese zentrale Öffnung 11 eine unrunde Form auf, sodass neben der mechanischen Verbindung zwischen dem Schaft 40 und der Einlegescheibe 10 eine Verdrehsicherung durch diese Verbindung realisiert wird. Alternativ zu diesem mechanischen Verbinden ist es ebenfalls bevorzugt, den Schaft 40 und die Einlegeseheibe 10 mithilfe eines thermischen Verfahrens, wie vorzugsweise das Ultraschallschweißen oder das Reibschweißen, zu verbinden. Diese Verfahren sind generell bekannt. Dabei werden an der Grenzfläche zwischen Schaft 40 und Einlegescheibe 10 die aneinander grenzenden Kunststoffe plastifiziert, sodass sie eine verlässliche Verbindung zueinander eingehen können. Als eine dritte Verfahrensroute wird der Schaft 40 an der Einlegescheibe 10 klebend befestigt (Schritt A6). Zudem ist es bevorzugt, den Schaft 40 und die Einlegescheibe 10 miteinander zu verpressen oder zu vernieten.

Alternativ zu den oben beschriebenen Herstellungsverfahren ist es gemäß einem nicht erfindungsgemäßen Beispiel weiter möglich, eine Einlegescheibe beliebiger Konfiguration bereitzustellen und nachfolgend mit dem Schaft 40 zu verbinden. Denn der auf diese Weise hergestellte Befestigungseinleger 1;1' zeichnet sich im Speziellen durch die Kombination des Schafts 40 mit einer metallischen Funktionsstruktur 60 aus. Das Verbinden zwischen Einlegescheibe 10 und Schaft 40 erfolgt ebenfalls gemäß den bereits oben beschriebenen alternativen Herstellungsrouten. Insofern kann der Schaft 40 mechanisch in der Einlegescheibe geklemmt oder verrastet werden, wobei vorzugsweise eine unrund ausgebildete zentrale Öffnung in der Einlegescheibe genutzt wird. Alternativ dazu erfolgt ein thermisches Verbinden zwischen Schaft und Einlegescheibe, was vorzugsweise mittels Ultraschallschweißen oder Reibschweißen realisiert wird. Zudem ist es bevorzugt, die Einlegescheibe und den Schaft 40 klebend miteinander zu verbinden.

Entsprechend wird als weiterer bevorzugter Herstellungsschritt ein Gewinde 46 an der radialen Innenseite 45 des Schafts 40 bereitgestellt, um darin den Drahtgewindeeinsatz D installieren zu können (Schritt A7). In einer alternativen Herstellungsroute wird der Gewindeeinsatz 92 oder ein Verbindungseinsatz über ein thermisches (Schritt A8) oder ein mechanisches Verfahren (Schritt A9) im Schaft 40 installiert. In gleicher Weise ist ebenfalls ein Klebeverfahren anwendbar um den Gewindeeinsatz 92 oder den Verbindungseinsatz im Schaft 40 zu befestigen. Diese Installationsschritte werden vorzugsweise durchgeführt, bevor oder nachdem die Einlegescheibe 10 mit dem Schaft 40 verbunden worden ist.

In diesem Herstellungsverfahren ist es erfindungsgemäß, die Einlegescheibe 10 mit den zwei einander gegenüberliegend angeordneten Befestigungsseiten 12, 14 und mehreren außermittig um den Schaft 40 angeordneten Durchgangsöffnungen 16, 18 bereitzustellen. Zudem weist die Einlegescheibe die bereits oben beschriebene Verzahnung 22, 24 auf, die einseitig oder beidseitig über die jeweilige Befestigungsseite 12, 14 hinaus steht.

Sollte nicht bereits im Herstellungsverfahren des Befestigungseinlegers 1; 1' die metallische Funktionsstruktur 60 installiert worden sein, wird noch ein Ausstattungsverfahren für den Befestigungseinleger 1; 1' beschrieben. In diesem Ausstattungsverfahren wird im ersten Schritt a zunächst der T-förmige Befestigungseinleger 1; 1' oder ein Bauteil mit einem daran befestigten T-förmigen Befestigungseinleger 1; 1' bereitgestellt. Nachfolgend wird in einem weiteren Schritt b der Drahtgewindeeinsatz D in dem Innengewinde 46 des Schafts 40 des T-förmigen Befestigungseinlegers 1; 1' installiert. Alternativ dazu ist es ebenfalls bevorzugt, den Gewindeeinsatz 92 oder einen Verbindungseinsatz über die bereits oben beschriebenen thermischen oder mechanischen Verfahren oder über ein Klebeverfahren in dem Schaft 40 des Befestigungseinlegers 1; 1' zu installieren (Schritt c).

Vorliegende Erfindung offenbart zudem ein Herstellungsverfahren für ein Bauteil aus einem Verbundwerkstoff, einem Kunststoffmaterial oder einer Laminat-Kombination in dem der oben beschriebene T-förmige Befestigungseinleger 1; 1' in seinen bevorzugten Ausführungsformen verwendet wird. Dabei profitiert das Herstellungsverfahren vorzugsweise von der Konstruktion des Befestigungseinlegers 1; 1', da sich dieser bereits während des Herstellungsverfahrens mit zumindest einer benachbarten Materiallage wenigstens formschlüssig und bevorzugt formschlüssig und/oder stoffschlüssig verbindet. Zudem stellt der Befestigungseinleger 1; 1' aufgrund seiner konstruktiven Merkmale zumindest eine zusätzliche formschlüssige Verbindung innerhalb des Bauteilmaterials her, was eine zusätzliche Verankerung und damit Dauerhaftigkeit und Belastbarkeit der Verbindung aus Bauteil und Befestigungseinleger 1; 1' unterstützt.

Wie oben bereits beschrieben worden ist, wird der Befestigungseinleger 1; 1' bevorzugt in Kombination mit faserverstärkten Materialien, insbesondere in CFK-Bauteilen, eingesetzt. Die faserverstärkten Verbundmaterialien werden aus bekannten Faser-Matrix-Halbzeugen hergestellt. Unter einem Faser-Matrix-Halbzeug versteht man ein Halbzeug aus einer Verstärkungsfaser, die mit einer Kunststoffmatrix getränkt ist oder getränkt wird oder in bzw. mit dieser verpresst wird. Bekannte Beispiele für derartige Halbzeuge sind Prepregs. Dieses Halbzeug besteht aus Endlosfasern, die mit einer Kunststoffmatrix, beispielsweise eine Polymermatrix, getränkt sind. Die Fasern formen entweder eine unidirektionale Schicht oder sie liegen als Gewebe, Gestricke, Geflecht, Gewebekomplex, Matten oder Gelege vor. Weitere Faser-Matrix-Halbzeuge für faserverstärkte Bauteile, insbesondere für CFK-Bauteile, sind SMC (Sheet Molding Compound) und BMC (Bulk Molding Compound). SMC sind meist plattenförmig und werden in einer Pressform verarbeitet. Dabei können Befestigungseinleger 1; 1' in die Pressform eingelegt, in die Platten eingedrückt und verarbeitet werden. BMC ist eine formlose Masse, die mithilfe der bekannten Heißpresstechnik als Pressmasse verarbeitet wird. Weiterhin lassen sich die BMC mit der Spritzgusstechnik verarbeiten. Dabei sind die Verstärkungsfasern so kurz, dass sie beim Pressen oder Spritzen mit dem Reaktionsharz durch die Form fließen können. Weiterhin werden als Verbundmaterial faserhaltige Organobleche, wie Organobleche mit Kohlenstofffasern, angesehen, die mittels Hybridmolding verarbeitet werden. Zudem zählen Gewebe, Vliese und Filze dazu, die in einer Harzmatrix oder allgemein in einer Kunststoffmatrix verarbeitet werden.

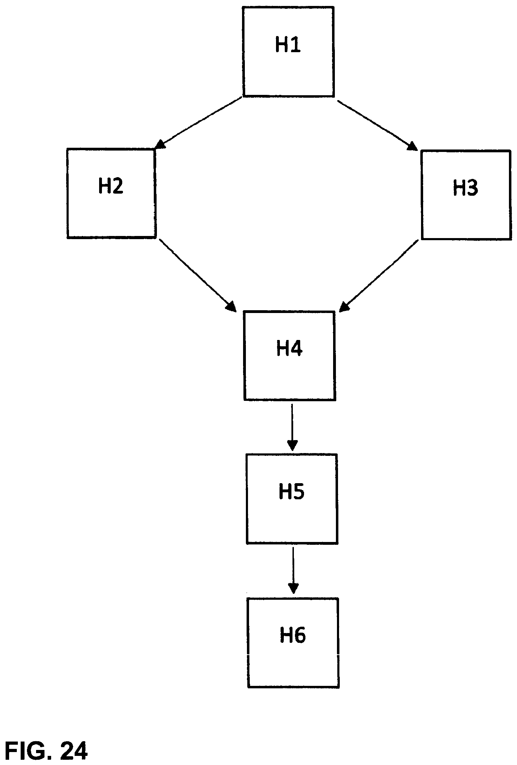

In einem ersten Verfahrensschritt H1 wird eine Bauteilform mit mindestens einer ersten Materiallage, vorzugsweise eine erste Faserlage, bereitgestellt. Die Bauteilform gibt eine komplementäre Gestalt eines herzustellenden Bauteils vor bzw. legt diese fest (siehe Fig. 24).

Die Bauteilherstellung greift auf bekannte Verarbeitungsverfahren für faserverstärkte Verbundmaterialien zurück. Daher sind in diesem Zusammenhang das Resin Transfer Molding (RTM), das Prepreg-Pressverfahren sowie die Autoklavetechnologie bevorzugt, um nur einige ausgewählte Beispiele zu nennen. Beim Resin-Transfer-Molding-(RTM)-Verfahren wird zunächst trockenes Verstärkungsmaterial in einer Form über einen Binder in eine sogenannte pre-form überführt. Dabei kann die Faserorientierung durch Näh- und Stickverfahren der pre-forms durch gezieltes Ablegen den Lastfällen im Bauteil angepasst werden. Dieser textile Vorformlink wird dann in die Bauteilform eingelegt und nach dem Schließen der Form mit Matrixharz injiziert bzw. infiltriert. Danach erfolgt die Aushärtung unter Temperatur und Druck.

Im genannten Prepreg-Pressverfahren werden mit Harz vorimprägnierte Faserhalbzeuge (prepregs) in einer beheizten Bauteilform in Form gepresst und ausgehärtet. Dazu wird zunächst der Prepreg, also ein vorimprägniertes faserverstärktes Material zugeschnitten und in Form von Lagen in der Bauteilform angeordnet. Danach sorgt ein an die Bauteilform angepasster Formstempel als Werkzeug für die Formgebung der eingelegten Materiallagen. Während die Formgebung unter Einwirkung von Druck und Wärme erfolgt, werden nachfolgend die verpressten Materialien zu einem Bauteil ausgehärtet. Danach wird auch hier das hergestellte Bauteil aus der Form entformt.

Auch in der oben genannten bevorzugten Autoklaventechnologie werden Faser-Matrix-Halbzeuge in Form von zugeschnittenen Materiallagen, Matten oder dergleichen für die Bauteilform vorbereitet. Hier sind bevorzugt die textilen Lagen aus faserverstärkendem Material, insbesondere aus Kohlenstofffasern, von Bedeutung, die als Gewebe, Gestricke, Geflecht, Gewebekomplex, Matten oder Gelege und in zugeschnittener Form in die Bauteilform eingelegt werden. Danach wird ein Harz in die geschlossene Bauteilform eingebracht, um das Bauteil auszuformen und auszuhärten. Während der Anteil des Faservolumens im Bauteil relativ hoch ist, erfolgt zudem das abschließende Aushärten der Harzmatrix unter dem Einfluss eines Vakuums und bei Temperaturen von ungefähr 100°-200°. Danach kann das Bauteil entformt werden.

Die oben genannten bevorzugten Verfahrensrouten nutzen in gleicher Weise mindestens eine erste Materiallage oder eine Mehrzahl von Materiallagen, die in die Bauteilform eingelegt werden. Diese erste Materiallage ist vorzugsweise eine erste Faserlage, wobei man unter Faserlage auch eine Lage aus einem Faser-Matrix-Halbzeug versteht, welches bevorzugt eine Verstärkung aus Kohlenstofffasern aufweist.

Im weiteren Verlauf des Herstellungsverfahrens wird der bevorzugte Befestigungseinleger 1; 1' auf der mindestens einen ersten Materiallage positioniert und vorfixiert. Sofern das Vorfixieren im Schritt H2 durch eine formschlüssige Verbindung erfolgt, greift die Verzahnung 24 der Einlegescheibe 10 des Befestigungseinlegers 1; 1' in die erste Materiallage ein, wenn der Befestigungseinleger auf dieser ersten Materiallage positioniert wird. Da sich die Verzahnung 24 vorzugsweise in der ersten Materiallage verhakt, wird dadurch auch eine positionssichernde formschlüssige Verbindung hergestellt.

Ergänzend dazu oder alternativ erfolgt im Schritt H3 ein Vorfixieren des Befestigungseinlegers 1;1' mithilfe einer stoffschlüssigen Verbindung. Dabei wird auf die der ersten Materiallage zugewandten Befestigungsseite 14 des Befestigungseinlegers 1; 1' Klebstoff aufgetragen, um damit den Befestigungseinleger 1; 1' auf der ersten Materiallage vorzufixieren. In diesem Zusammenhang ist es bevorzugt, dass der Klebstoff tatsächlich nur für eine Vorfixierung, nicht aber für einen belastbaren mechanischen Halt des Befestigungseinlegers 1; 1' auf der ersten Materiallage sorgt. Aufgrund dieses reduzierten Anspruchs an die herzustellende stoffschlüssige Verbindung ist nur ein geringes Klebstoffvolumen an der ersten Befestigungsseite 14 ausreichend, um eine Positionsstabilität des Befestigungseinlegers auf der ersten Materiallage zu gewährleisten.

In diesem Zusammenhang ist es ebenfalls bevorzugt, dass ein Klebstoff eingesetzt wird, der mittels Licht und/oder Wärme aktivierbar und/oder aushärtbar ist. Falls Licht bestimmter Wellenlänge zum Aktivieren und/oder Aushärten des Klebstoffs eingesetzt wird, weist der Befestigungseinleger 1; 1' eine Einlegescheibe 10 auf, die aus transparentem oder mit Licht durchstrahlbarem Kunststoff besteht. Diese spezielle konstruktive Ausgestaltung ist oben näher erläutert. Des Weiteren ist es von Vorteil, wenn die Einlegescheibe 10 an ihrer der ersten Materiallage zugewandten Befestigungsseite 14 den konkav gewölbten Bereich 28 aufweist, um das Klebstoffvolumen aufzunehmen. Denn dieser konkav gewölbte Bereich 28 stellt sicher, dass der Klebstoff bevorzugt nur in diesem Bereich auch nach dem Aufsetzen auf der ersten Materiallage angeordnet bleibt. Dadurch wird vermieden, dass aushärtender Klebstoff vorhandene Durchgangsöffnungen in der Einlegescheibe 10 blockiert, die aber für die Vernetzung benachbarter Materiallagen vorgesehen sind. Alternativ ist es ebenfalls bevorzugt, den Befestigungseinleger 1;1' mit einer Klebefolie, einem Nähverfahren oder einer ähnlichen Positionssicherung vorzufixieren.

Nachdem der Befestigungseinleger 1; 1' passend positioniert und vorfixiert worden ist, wird vorzugsweise im Schritt H4 mindestens eine zweite Materiallage, vorzugsweise eine zweite Faserlage, auf der der zweiten Materiallage zugewandten zweiten Befestigungsseite 12 des Befestigungseinlegers 1;1' angeordnet. Dabei ist in bekannter Weise darauf zu achten, dass die zweite Materiallage nicht den Schaft 40 des Befestigungseinlegers 1; 1' verschließt bzw. abdeckt sondern diesen umgibt. Da die zweite Faserlage ebenfalls bevorzugt aus einem Faser-Matrix-Halbzeug besteht, insbesondere aus einem kohlenstofffaserverstärkten Matrix-Halbzeug, liegt diese als Gewebe, Gestrick, Geflecht, Gewebekomplex, Matte oder Gelege vor. Bei dieser Anordnung sind benachbarte Bereiche in dieser zweiten Materiallage derart umordenbar, dass der Schaft 40 durch eine auf diese Art und Weise erzeugte Öffnung in der zweiten Materiallage durchgesteckt werden kann. Auf diese Weise ist sichergestellt, dass die zweite Materiallage den Schaft 40 des Befestigungseinlegers 1; 1' umgibt und nicht abdeckt.

Da die erfindungsgemäß bevorzugte Einlegescheibe 10 auch an der Befestigungsseite 12 eine bevorzugte Verzahnung 22 aufweist, greift diese vorzugsweise in die zweite Materiallage ein. Auf diese Art und Weise erfolgt ein bevorzugtes Fixieren der zweiten Befestigungsseite 12 der Einlegescheibe 10 an der zweiten Materiallage im Schritt H5.

Im Hinblick auf das Vorfixieren des Befestigungseinlegers 1; 1' ist es ebenfalls bevorzugt, diesen mit der ersten Materiallage und/oder mit der zweiten Materiallage zu vernähen. Auch diese Verbindung stellt sicher, dass der Befestigungseinleger 1; 1' während der Bauteilherstellung seine Position beibehält und somit das Bauteil mit passender Anordnung des Befestigungseinlegers 1; 1' ausgeformt wird.

Abschließend wird die Verbindung aus Befestigungseinleger 1; 1' und zumindest der ersten Materiallage eingebettet, sodass ein faserverstärkter Kunststoff vorliegt. Im Rahmen dieses Einbettens wird der Stapel aus erster und zweiter Materiallage mit zwischengeordnetem Befestigungseinleger 1; 1' mit einem flüssigen Harzmaterial getränkt. Dieses Harzmaterial liegt zum Teil in den bereits vorgefertigten und in die Form eingelegten Faser-Matrix-Halbzeugen vor. Zudem wird bevorzugt weiteres Harzmaterial der Bauteilform zugeführt, sodass dann unter der Einwirkung von Druck und Wärme das Bauteil ausgeformt werden kann. Nachdem der das Bauteil bildende mehrlagige Verbundwerkstoff ausgehärtet ist, wird er aus der Bauteilform entformt. Um während dieser Schritte das Innere des Schafts 40 vor Verschmutzung zu schützen, wird dieser vorzugsweise mit einem entfernbaren Stopfen verschlossen.

Erfindungsgemäß bevorzugt wird das Bauteil mit einer Kohlefaserverstärkung unterschiedlichster Konfiguration hergestellt. Zudem wird vorzugsweise das oben beschriebene RTM-Verfahren zur Bauteilproduktion eingesetzt. In gleicher Weise ist es bevorzugt, die Faser-Matrix-Halbzeuge durch Kaltpressen oder durch Warmpressen zu dem gewünschten Bauteil zu formen.

### Bezugszeichenliste

- 1: Befestigungseinleger
- 10: Einlegescheibe
- 11: zentrale Öffnung
- 12, 14: Befestigungsseiten
- 16, 18: Durchgangsöffnungen
- 20: radialer Außenbereich
- 22, 24: Verzahnung
- 26: Zentralbereich
- 28: Vertiefung
- 40: hohlzylindrischer Schaft
- 42: Befestigungsabschnitt
- 44: Funktionsabschnitt
- 45: Innenseite
- 46: Innengewinde
- 47: Gewindevertiefung
- 48: axiales Ende des Schafts
- 49: Freimachung
- 60: metallische Funktionsstruktur
- 90: auf Block gewickelter Drahtgewindeeinsatz
- 92: Gewindeeinsatz
- D: Drahtgewindeeinsatz
- B₂: zweites Bauteil
- S: Schraube

## Patentansprüche

1. Befestigungseinleger (1) aus Kunststoff mit einer T-förmigen Konfiguration bestehend aus einer Einlegescheibe (10) und einem an der Einlegescheibe (10) über einen Befestigungsabschnitt (42) fest angeordneten und über diese einseitig oder beidseitig mit einem Funktionsabschnitt (44) vorstehenden Schaft (40), von denen zumindest die Einlegescheibe (10) in einem Schaummaterial oder einem Verbundmaterial während einer Bauteilherstellung positionierbar und durch die Bauteilherstellung darin befestigbar ist, in dem die Einlegescheibe (10) aufweist:
a. zwei einander gegenüberliegend angeordnete Befestigungsseiten (12, 14), die jeweils zumindest teilweise eine Anlagefläche für die Materiallage bilden, und der Befestigungseinleger (1) ist **dadurch gekennzeichnet, dass** die Einlegescheibe (10) weiterhin aufweist:
b. mehrere außermittig um den Schaft (40) angeordnete Durchgangsöffnungen (16, 18), die die Befestigungsseiten (12, 14) miteinander verbinden und von denen mindestens eine Durchgangsöffnung (16, 18) einen vollständig umlaufenden oder einen abschnittsweise umlaufenden Randvorsprung aufweist, der als Verzahnung (22, 24) ausgebildet ist und sich einseitig oder beidseitig über die jeweilige Befestigungsseite (12, 14) der Einlegescheibe (10) hinaus erstreckt.

2. Befestigungseinleger (1) gemäß Patentanspruch 1, dessen Einlegescheibe (10) zumindest einen umlaufenden ringartigen radialen Außenbereich (20) aufweist, in dem eine erste Mehrzahl der Durchgangsöffnungen (16, 18) gleichmäßig beabstandet zueinander angeordnet ist, die kreisförmig und/oder als Langloch ausgebildet sind.

3. Befestigungseinleger (1) gemäß Patentanspruch 2, dessen Schaft (40) zylindrisch oder hohlzylindrisch konfiguriert ist und in dessen Einlegescheibe (10) die erste Mehrzahl an Durchgangsöffnungen (16, 18) im Außenbereich (20) bogenförmige Langlöcher sind, deren Verzahnung (22, 24) sich beidseitig über die Befestigungsseiten (12, 14) der Einlegescheibe (10) hinaus erstreckt, oder dessen ringartiger radialer Außenbereich (20) der Einlegescheibe (10) in einer Ebene angeordnet ist und einen gewölbt ausgebildeten Zentralbereich (26) umgibt, der aus dieser Ebene heraus in Richtung Funktionsabschnitt (44) des Schafts (40) gewölbt ist, wobei eine konkave Vertiefung (28) des Zentralbereichs (26) einen zumindest ringförmigen radialen Freiraum definiert, der radial auswärts bezogen auf eine Schaftaußenfläche angeordnet ist.

4. Befestigungseinleger (1) gemäß Patentanspruch 3, zweite Alternative, in dessen gewölbtem Zentralbereich (26) eine zweite Mehrzahl der Durchgangsöffnungen (16, 18) gleichmäßig beabstandet zueinander angeordnet ist, die kreisförmig und/oder als Langloch ausgebildet sind.

5. Befestigungseinleger (1) gemäß Patentanspruch 4, dessen erste Mehrzahl der Durchgangsöffnungen (16, 18) und dessen zweite Mehrzahl der Durchgangsöffnungen (16, 18) jeweils eine einseitig überstehende Verzahnung (22, 24) aufweisen, die einander entgegengesetzt ausgerichtet ist.

6. Befestigungseinleger gemäß einem der Patentansprüche 3, zweite Alternative bis 5, in dem der gewölbte Zentralbereich (26) einen radial innen liegenden Ringsteg umgibt, der in axialer Richtung mit einem radialen Außenrand des gewölbten Zentralbereichs (26) endet und innerhalb des gewölbten Zentralbereichs (26) ein Ringvolumen definiert.

7. Befestigungseinleger (1) gemäß einem der vorhergehenden Patentansprüche 1, 2 oder 3, zweite Alternative bis 6, dessen Schaft (40) als Bolzen oder Hohlzylinder vorgesehen ist, der sich einseitig über die Einlegescheibe (10) hinaus erstreckt.

8. Befestigungseinleger (1) gemäß Patentanspruch 7, dessen Schaft (40) in einer zentralen unrunden Öffnung der Einlegescheibe (10) mit einem an die Form angepassten Befestigungsende angeordnet ist, so dass eine Verdrehsicherung zwischen Einlegescheibe (10) und Schaft (40) bereitgestellt ist, und/oder dessen Schaft (40) an einer radialen Außenseite radial vorstehende Verankerungsmerkmale aufweist, um den Befestigungseinleger (1) über den Schaft (40) in einem Verbundmaterial zu befestigen.

9. Befestigungseinleger (1) gemäß einem der vorhergehenden Patentansprüche, wobei zumindest dessen Einlegescheibe (10) aus einem mit Licht durchstrahlbaren Kunststoff besteht oder dessen Schaft (40) an einer Stirnseite angrenzend an die Einlegescheibe (10) und/oder dessen Einlegescheibe (10) in einem zentralen Bereich angrenzend an den Schaft geschlossen ausgebildet ist.

10. Bauteil bestehend aus einem Schaummaterial oder einem Verbundmaterial, in welchem ein Befestigungseinleger (1) gemäß einem der Patentansprüche 1 bis 9, erste Alternative innerhalb des Schaummaterials oder des Verbundmaterials fest angeordnet ist.

11. Verbindung aus mindestens einem ersten und einem zweiten Bauteil (B₂), von denen zumindest das erste Bauteil ein Bauteil gemäß Patentanspruch 10 ist, um das zumindest eine erste und das eine zweite Bauteil (B₂) über ein Befestigungsmittel und den Befestigungseinleger (1) im ersten Bauteil miteinander zu verbinden.

12. Herstellungsverfahren eines T-förmigen Befestigungseinlegers (1) gemäß einem der vorhergehenden Patentansprüche 1 bis 9, erste Alternative, das die folgenden Schritte aufweist:
a. Bereitstellen einer Spritzgussform, deren Formhohlraum in komplementärer Form die strukturellen Merkmale des Befestigungseinlegers (1) vorgibt, (S1)
b. Füllen des Formhohlraums mit mindestens einem fließenden Kunststoff, (S3, S4)
c. Aushärten des im Formhohlraum eingeschlossenen Kunststoffs (S5) und
d. Entformen des Befestigungseinlegers (1) aus der Spritzgussform (S6).

13. Herstellungsverfahren gemäß Patentanspruch 12, das weiterhin aufweist:
Füllen des Formhohlraums mit nur einem Kunststoff, sodass der Befestigungseinleger (1) in einem 1K-Spritzgussverfahren hergestellt wird (S3) oder Füllen des Formhohlraums im Bereich der auszuformenden Einlegescheibe (10) mit einem ersten Kunststoff und im Bereich des Schafts (40) mit einem zweiten Kunststoff, sodass der Befestigungseinleger (1) in einem 2KSpritzgussverfahren hergestellt wird (S4).

14. Herstellungsverfahren gemäß Patentanspruch 13 zweite Alternative, in dem der erste und der zweite Kunststoff gleich sind und sich in einem Anteil an Verstärkungsfasern unterscheiden oder in dem der erste und der zweite Kunststoff in einer chemischen Zusammensetzung verschieden sind oder in dem der erste und der zweite Kunststoff in einer chemischen Zusammensetzung verschieden sind und unterschiedlichen Anteile an Verstärkungsfasern aufweisen.

15. Herstellungsverfahren gemäß einem der Patentanspruch 12 bis 14, in dem zumindest die Einlegescheibe (10) nach der Herstellung aus dem ersten Kunststoff transparent oder zumindest mit Licht durchstrahlbar ist und/oder in dem die Spritzgussform eine Einlegescheibe (10) definiert, die zwei einander gegenüberliegend angeordnete Befestigungsseiten (12, 14) mit mehrere außermittig um den Schaft (40) angeordneten Durchgangsöffnungen (16, 18) aufweist, die die Befestigungsseiten (12, 14) miteinander verbinden und von denen mindestens eine Durchgangsöffnung (16, 18) einen vollständig umlaufenden oder einen abschnittsweise umlaufenden Randvorsprung aufweist, der als Verzahnung (22, 24) ausgebildet ist und sich einseitig oder beidseitig über die jeweilige Befestigungsseite (12, 14) der Einlegescheibe (10) hinaus erstreckt.

16. Herstellungsverfahren eines T-förmigen Befestigungseinlegers (1) gemäß einem der vorhergehenden Patentansprüche 1 bis 9, das die folgenden Schritte aufweist:
a. Bereitstellen (A1) einer Einlegescheibe (10) des Befestigungseinlegers (1) aus Kunststoff, vorzugsweise aus transparentem oder mit Licht durchstrahlbarem Kunststoff, die zwei einander gegenüberliegend angeordnete Befestigungsseiten (12, 14) mit mehreren außermittig um den Schaft (40) angeordneten Durchgangsöffnungen (16, 18) aufweist, die die Befestigungsseiten (12, 14) miteinander verbinden und von denen mindestens eine Durchgangsöffnung (16, 18) einen vollständig umlaufenden oder einen abschnittsweise umlaufenden Randvorsprung aufweist, der als Verzahnung (22, 24) ausgebildet ist und sich einseitig oder beidseitig über die jeweilige Befestigungsseite (12, 14) der Einlegescheibe (10) hinaus erstreckt
b. Bereitstellen eines Schafts (40) des Befestigungseinlegers (1) (A2),
c. Verbinden der Einlegescheibe (10) und des Schafts (40) unverlierbar zu einem T-förmigen Befestigungseinleger (1) (A3; A4; A5; A6).

17. Herstellungsverfahren gemäß Patentanspruch 16, in dem die Einlegescheibe (10) und der Schaft (40) verbunden werden durch:
i. mechanisches Klemmen (A3) oder Verrasten (A4) des Schafts (40) in einer zentralen Öffnung der Einlegescheibe (10) oder
ii. thermisches Verbinden (A5) des Schafts (40) und der Einlegescheibe (10), vorzugsweise mittels Ultraschallschweißen oder Reibschweißen, oder
iii. Kleben (A6) des Schafts (40) und der Einlegescheibe (10).

18. Herstellungsverfahren für ein Bauteil aus einem Verbundwerkstoff mit einem T-förmigen Befestigungseinleger (1) gemäß einem der Patentansprüche 1 bis 7, der eine Einlegescheibe (10) und einen daran befestigten Schaft (40) aufweist, das die folgenden Schritte umfasst:
I. Bereitstellen (H1) einer Bauteilform mit mindestens einer ersten Materiallage, vorzugsweise eine erste Faserlage, wobei die Bauteilform eine komplementäre Gestalt eines herzustellenden Bauteils festlegt,
II. Positionieren und Vorfixieren des Befestigungseinlegers (1) auf der mindestens einen ersten Materiallage, wobei das Vorfixieren durch Herstellen einer stoffschlüssigen und/oder formschlüssigen Verbindung zwischen einer der ersten Materiallage zugewandten ersten Befestigungsseite (12, 14) der Einlegescheibe (10) und der ersten Materiallage erfolgt (H2, H3),
III. nach Schritt II Einbetten der Verbindung aus Befestigungseinleger (1) und erster Materiallage in einen faserverstärkten Kunststoff oder in ein Schaummaterial (H6).

19. Herstellungsverfahren gemäß Patentanspruch 18, mit dem weiteren Schritt:
IV. Anordnen mindestens einer zweiten Materiallage, vorzugsweise eine zweite Faserlage, auf einer der zweiten Materiallage zugewandten zweiten Befestigungslage derart, dass die zweite Materiallage den Schaft (40) des Befestigungseinlegers umgibt (H4), oder
V. Tränken des Stapels aus erster und zweiter Materiallage mit zwischengeordnetem Befestigungseinleger (1) mit einem flüssigen Harzmaterial sowie Aushärten zu einem Bauteil aus einem mehrlagigen Verbundwerkstoff (H6).

20. Herstellungsverfahren gemäß Patentanspruch 18 oder 19, wobei das Vorfixieren durch eine formschlüssige Verbindung mit Hilfe einer Verzahnung (22, 24) an der ersten Befestigungsseite (12, 14) der Einlegescheibe (10) hergestellt wird, die zumindest in die erste Materiallage eingreift und sich darin verhakt (H2), und/oder wobei das Vorfixieren durch eine stoffschlüssige Verbindung mit Hilfe eines verbindenden Klebstoffs zwischen der ersten Befestigungsseite (12, 14) der Einlegescheibe (10) und der ersten Materiallage erfolgt, der mit Hilfe von Licht und/oder Wärme ausgehärtet wird (H3).

21. Herstellungsverfahren gemäß Patentanspruch 20, zweite Alternative, mit dem weiteren Schritt: Aufbringen eines Klebstoff in einer konkaven Vertiefung der ersten Befestigungsseite (12, 14) und Aushärten des Klebstoffs durch Lichteinstrahlung nach dem Positionieren auf der ersten Materiallage, indem die aus einem transparentem oder mit Licht durchstrahlbarem Material bestehende Einlegescheibe (10) durchstrahlt wird.

22. Herstellungsverfahren gemäß einem der Patentansprüche 19 bis 21 mit dem weiteren Schritt: Fixieren der zweiten Befestigungsseite (14, 12) der Einlegescheibe (10) zumindest mit Hilfe einer formschlüssigen Verbindung an der zweiten Materiallage, indem eine Verzahnung (24, 22) an der zweiten Befestigungsseite (14, 12) der Einlegescheibe (10) zumindest in die zweite Materiallage eingreift.

23. Herstellungsverfahren gemäß einem der Patentansprüche 18 bis 20, erste Alternative oder 21 bis 22 mit dem weiteren Schritt: Annähen des Befestigungseinlegers (1) an der zumindest einen ersten Materiallage.

24. Herstellungsverfahren gemäß einem der Patentansprüche 18 bis 23, wobei das Bauteil in einem RTM-Verfahren oder durch Kaltpressen oder durch Warmpressen hergestellt wird.

## Claims

1. Fastening insert (1) made of plastic with a T-shaped configuration consisting of an insert disc (10) and a shaft (40) which is fixedly arranged on the insert disc (10) via a fastening section (42) and projects beyond the insert disc (10) on one side or on both sides with a functional section (44), of which at least the insert disc (10) is positionable in a foam material or a composite material during a component manufacturing and is fastenable therein by the component manufacturing, in which the insert disc (10) comprises:
a. two fastening sides (12, 14) arranged opposite one another, each forming at least partially an abutment face for the material layer, and the fastening insert (1) is **characterized in that** the insert disc (10) further comprises:
b. a plurality of passage openings (16, 18) arranged eccentrically about the shaft (40), which connect the fastening sides (12, 14) to one another and of which at least one passage opening (16, 18) has an edge projection extending circumferentially continuously or circumferentially in sections, which is formed as toothing (22, 24) and extends on one side or on both sides beyond the respective fastening side (12, 14) of the insert disc (10).

2. Fastening insert (1) according to claim 1, the insert disc (10) of which comprises at least one circumferential annular radial outer portion (20), in which a first plurality of the passage openings (16, 18), which are formed circularly and/or as an elongated hole, is arranged equally spaced from one another.

3. Fastening insert (1) according to claim 2, the shaft (40) of which is configured cylindrically or hollow-cylindrically and in the insert disc (10) of which the first plurality of passage openings (16, 18) are arc-shaped elongated holes in the outer portion (20), the toothing (22, 24) of which extends on both sides beyond the fastening sides (12, 14) of the insert disc (10), or the ring-like radial outer portion (20) of the insert disc (10) is arranged in a plane and surrounds a domeshaped central portion (26) which is domed out of this plane in the direction of the functional section (44) of the shaft (40), wherein a concave recess (28) of the central portion (26) defines an at least annular radial free space which is arranged radially outwardly with respect to an outer face of the shaft.

4. Fastening insert (1) according to claim 3, second alternative, in the domed central portion (26) of which a second plurality of the passage openings (16, 18), which are formed circularly and/or as an elongated hole, is arranged equally spaced from one another.

5. Fastening insert (1) according to claim 4, the first plurality of the passage openings (16, 18) of which and the second plurality of the passage openings (16, 18) of which each have a toothing (22, 24) projecting on one side, which is oriented opposite to one another.

6. Fastening insert according to one of the claims 3, second alternative, to 5, in which the domed central portion (26) surrounds an annular web located radially inwards, which ends in the axial direction with a radial outer edge of the domed central portion (26) and defines an annular volume within the domed central portion (26).

7. Fastening insert (1) according to one of the preceding claims 1, 2 or 3, second alternative, to 6, the shaft (40) of which is provided as a bolt or hollow cylinder extending on one side beyond the insert disc (10).

8. Fastening insert (1) according to claim 7, the shaft (40) of which is arranged in a central noncircular opening of the insert disc (10) with a fastening end adapted to the form so that an antirotation protection is provided between insert disc (10) and shaft (40), and/or the shaft (40) of which comprises radially projecting anchoring features on a radial outer side in order to fasten the fastening insert (1) by means of the shaft (40) in a composite material.

9. Fastening insert (1) according to one of the preceding claims, wherein at least the insert disc (10) consists of a plastic which can be irradiated with light or the shaft (40) of which is formed closed at an end face adjacent to the insert disc (10) and/or the insert disc (10) of which is formed closed in a central portion adjacent to the shaft.

10. Component consisting of a foam material or a composite material in which a fastening insert (1) according to one of the claims 1 to 9, first alternative, is fixedly arranged within the foam material or the composite material.

11. Connection of at least one first and one second component (B₂), of which at least the first component is a component according to claim 10, in order to connect the at least one first and the one second component (B₂) by means of a fastening means and the fastening insert (1) in the first component to one another.

12. Manufacturing method of a T-shaped fastening insert (1) according to one of the preceding claims 1 to 9, first alternative, which comprises the following steps:
a. providing an injection mold, the mold cavity of which, in complementary form, dictates the structural features of the fastening insert (1) (S1),
b. filling the mold cavity with at least one flowing plastic (S3, S4),
c. curing of the plastic enclosed in the mold cavity (S5) and
d. demolding the fastening insert (1) from the injection mold (S6).

13. Manufacturing method according to claim 12, which further comprises:
filling the mold cavity with only one plastic, so that the fastening insert (1) is manufactured in a one-component (1K) injection molding method (S3) or filling the mold cavity in the portion of the insert disc (10) to be molded with a first plastic and in the portion of the shaft (40) with a second plastic, so that the fastening insert (1) is manufactured in a two-component (2K) injection molding method (S4).

14. Manufacturing method according to claim 13, second alternative, in which the first and the second plastic are the same and differ in an amount of reinforcing fibers or in which the first and the second plastic are different in a chemical composition or in which the first and the second plastic are different in a chemical composition and have different amounts of reinforcing fibers.

15. Manufacturing method according to one of the claims 12 to 14, in which at least the insert disc (10), after being manufactured from the first plastic, is transparent or can at least be irradiated by light and/or in which the injection mold defines an insert disc (10) which has two fastening sides (12, 14) arranged opposite one another with a plurality of passage openings (16, 18) arranged eccentrically about the shaft (40), which passage openings (16, 18) connect the fastening sides (12, 14) to one another and of which at least one passage opening (16, 18) comprises an edge projection extending circumferentially continuously or circumferentially in sections, which is formed as a toothing (22, 24) and extends on one side or on both sides beyond the respective fastening side (12, 14) of the insert disc (10).

16. Manufacturing method of a T-shaped fastening insert (1) according to one of the preceding claims 1 to 9, which comprises the following steps:
a. providing (A1) an insert disc (10) of the fastening insert (1) made of plastic, preferably made of transparent plastic or of plastic which can be irradiated by light, which comprises two fastening sides (12, 14) arranged opposite one another with a plurality of passage openings (16, 18) arranged eccentrically about the shaft (40), which connect the fastening sides (12, 14) to one another and of which at least one passage opening (16, 18) comprises an edge projection extending circumferentially continuously or circumferentially in sections, which is formed as a toothing (22, 24) and extends on one side or on both sides beyond the respective fastening side (12, 14) of the insert disc (10),
b. providing a shaft (40) of the fastening insert (1) (A2),
c. connecting the insert disc (10) and the shaft (40) in a captive manner to form a T-shaped fastening insert (1) (A3; A4; A5; A6).

17. Manufacturing method according to claim 16, in which the insert disc (10) and the shaft (40) are connected by:
i. mechanically clamping (A3) or latching (A4) of the shaft (40) in a central opening of the insert disc (10) or
ii. thermally connecting (A5) of the shaft (40) and the insert disc (10), preferably by ultrasonic welding or friction welding, or
iii. gluing (A6) of the shaft (40) and the insert disc (10).

18. Manufacturing method for a component made of a composite material with a T-shaped fastening insert (1) according to one of the claims 1 to 7, comprising an insert disc (10) and a shaft (40) fastened thereto, which comprises the following steps:
I. providing (H1) a component mold with at least one first material layer, preferably a first fiber layer, wherein the component mold defines a complementary shape of a component to be manufactured,
II. positioning and pre-fixing the fastening insert (1) on the at least one first material layer, wherein the pre-fixing takes place by establishing a material-bond and/or form-fit connection between a first fastening side (12, 14) of the insert disc (10) facing the first material layer and the first material layer (H2, H3),
III. after step II, embedding the connection of the fastening insert (1) and the first material layer in a fiber-reinforced plastic or in a foam material (H6).

19. Manufacturing method according to claim 18, with the further step:
IV. arranging at least one second material layer, preferably a second fiber layer, on a second fastening layer facing the second material layer in such a manner that the second material layer surrounds the shaft (40) of the fastening insert (H4), or
V. soaking the stack of the first and the second material layer with the intermediate fastening insert (1) with a liquid resin material as well as curing to form a component out of a multilayer composite material (H6).

20. Manufacturing method according to claim 18 or 19, wherein the pre-fixing is produced by a form-fit connection with the help of a toothing (22, 24) at the first fastening side (12, 14) of the insert disc (10) which engages at least into the first material layer and interlocks therein (H2), and/or wherein the pre-fixing takes place by a material-bond connection with the help of a connecting adhesive between the first fastening side (12, 14) of the insert disc (10) and the first material layer, which is cured by means of light and/or heat (H3).

21. Manufacturing method according to claim 20, second alternative, with the further step: applying an adhesive in a concave recess of the first fastening side (12, 14) and curing the adhesive by light irradiation after the positioning on the first material layer in that the insert disc (10) consisting of a transparent material or a material which can be irradiated by light, is irradiated.

22. Manufacturing method according to one of the claims 19 to 21 with the further step: fixing the second fastening side (14, 12) of the insert disc (10) at least with the help of a form-fit connection at the second material layer in that a toothing (24, 22) at the second fastening side (14, 12) of the insert disc (10) engages at least into the second material layer.

23. Manufacturing method according to one of the claims 18 to 20, first alternative, or 21 to 22 with the further step: sewing the fastening insert (1) on the at least one first material layer.

24. Manufacturing method according to one of the claims 18 to 23, wherein the component is manufactured by means of a RTM (resin transfer molding) method or cold pressing or hot pressing.

## Revendications

1. Insert de fixation (1) en matière plastique avec une configuration en forme de T constituée d'un disque d'insert (10) et un arbre (40) disposé fixement sur le disque d'insert (10) par le biais d'une section de fixation (42) et faisant saillie unilatéralement ou bilatéralement par rapport à celui-ci avec une section fonctionnelle (44), parmi lesquels au moins le disque d'insert (10) peut être positionné dans un matériau en mousse ou un matériau composite pendant la fabrication d'un composant et peut être fixé dans celui-ci par la fabrication du composant, dans lequel le disque d'insert (10) présente :
a. deux côtés de fixation (12, 14) disposé de façon opposée l'un par rapport à l'autre, lesquels forment respectivement au moins partiellement une surface de contact pour la couche de matériau, et l'insert de fixation (1) est **caractérisé en ce que** le disque d'insert (10) présente en outre :
b. plusieurs ouvertures de passage (16, 18) disposées de façon excentrée autour de l'arbre (40), lesquelles relient les côtés de fixation (12, 14) entre eux et parmi lesquelles au moins une ouverture de passage (16, 18) présente une saillie de bordure complètement périphérique ou partiellement périphérique, laquelle est conçue comme une denture (22, 24) et s'étend unilatéralement ou bilatéralement au-delà du côté de fixation (12, 14) respectif du disque d'insert (10).

2. Insert de fixation (1) selon la revendication 1, dont le disque d'insert (10) présente au moins une région extérieure radiale annulaire périphérique (20), dans laquelle une première pluralité d'ouvertures de passage (16, 18) de forme circulaire et/ou conçues comme des trous oblongs sont disposées de façon équidistante les unes par rapport aux autres.

3. Insert de fixation (1) selon la revendication 2, dont l'arbre (40) est configuré de façon cylindrique ou comme un cylindre creux et dans le disque d'insert (10) duquel la première pluralité d'ouvertures de passage (16, 18) dans la région extérieure (20) consiste en des trous oblongs arqués, dont les dentures (22, 24) s'étendent bilatéralement au-delà des côtés de fixation (12, 14) du disque d'insert (10), ou dont la région extérieure radiale annulaire (20) du disque d'insert (10) est disposée dans un plan et entoure une région centrale (26) conçue de façon voûtée, laquelle est voûtée à partir de ce plan vers la section fonctionnelle (44) de l'arbre (40), dans lequel une cavité concave (28) de la région centrale (26) définit un espace libre radial au moins annulaire, laquelle est disposée radialement à l'extérieur par rapport à une surface extérieure d'arbre.

4. Insert de fixation (1) selon la revendication 3, deuxième alternative, dans la région centrale voûtée (26) duquel est disposée une deuxième pluralité d'ouvertures de passage (16, 18) équidistantes entre elles, lesquelles sont de forme circulaire et/ou conçues comme des trous oblongs.

5. Insert de fixation (1) selon la revendication 4, dont la première pluralité d'ouvertures de passage (16, 18) et dont la deuxième pluralité d'ouvertures de passage (16, 18) présentent respectivement une denture (22, 24) faisant saillie unilatéralement, lesquelles sont orientées de façon opposée les unes par rapport aux autres.

6. Insert de fixation selon l'une des revendication 3, deuxième alternative à 5, dans lequel la région centrale voûtée (26) entoure une nervure annulaire située radialement à l'intérieur, laquelle se termine par un bord extérieur radial de la région centrale voûtée (26) dans la direction axiale et définit un volume annulaire à l'intérieur de la région centrale voûtée (26).

7. Insert de fixation (1) selon l'une des revendications précédentes 1, 2 ou 3, deuxième alternative à 6, dont l'arbre (40) est prévu sous la forme d'un boulon ou d'un cylindre creux, lequel s'étend unilatéralement au-delà du disque d'insert (10).

8. Insert de fixation (1) selon la revendication 7, dont l'arbre (40) est disposé dans une ouverture centrale non circulaire du disque d'insert (10) avec une extrémité de fixation adaptée à la forme, de manière à fournir une sécurité anti-rotation entre le disque d'insert (10) et l'arbre (40), et/ou dont l'arbre (40) présente des caractéristiques d'ancrage faisant saillie radialement sur un côté extérieur radial, permettant de fixer l'insert de fixation (1) dans un matériau composite au moyen de l'arbre (40).

9. Insert de fixation (1) selon l'une des revendications précédentes, dans lequel au moins le disque d'insert (10) de celui-ci est constitué d'une matière plastique susceptible d'être traversée par une lumière, ou dont l'arbre (40) est conçu fermé sur un côté avant adjacent au disque d'insert (10) et/ou dont le disque d'insert (10) est conçu fermé dans une région centrale adjacente à l'arbre.

10. Composant constitué d'un matériau en mousse ou d'un matériau composite, dans lequel un insert de fixation (1) selon l'une des revendications 1 à 9, première alternative, est disposé fixement dans le matériau en mousse ou le matériau composite.

11. Assemblage d'au moins un premier et d'un deuxième composant (B₂), parmi lesquels au moins le premier composant est un composant selon la revendication 10, destiné à relier entre eux l'au moins un premier composant et le deuxième composant (B₂) à l'aide d'un moyen de fixation et de l'insert de fixation (1) dans le premier composant.

12. Procédé de fabrication d'un insert de fixation (1) en forme de T selon l'une des revendications 1 à 9, première alternative, lequel présente les étapes suivantes :
a. mise à disposition d'un moule d'injection, dont l'espace creux de moule définit dans une forme complémentaire les caractéristiques structurelles de l'insert de fixation (1), (S1)
b. remplissage de l'espace creux de moule avec au moins une matière plastique coulante, (S3, S4)
c. durcissement de la matière plastique renfermée dans l'espace creux de moule (S5) et
d. démoulage de l'insert de fixation (1) à partir du moule d'injection (S6).

13. Procédé de fabrication selon la revendication 12, présentant en outre :
- le remplissage de l'espace creux de moule avec seulement une matière plastique, de sorte que l'insert de fixation (1) est fabriqué au cours d'un procédé de moulage par injection à un composant (S3) ou remplissage de l'espace creux avec une première matière plastique moule dans la région du disque d'insert (10) à mouler et avec une deuxième matière plastique dans la région de l'arbre (40), de sorte que l'insert de fixation (1) est fabriqué au cours d'un procédé de moulage par injection à deux composants (S4).

14. Procédé de fabrication selon la revendication 13, deuxième alternative, dans lequel la première et la deuxième matière plastique sont identiques et se distinguent par une teneur en fibres de renforcement ou dans lequel la première et la deuxième matière plastique diffèrent quant à leur composition chimique ou dans lequel la première et la deuxième matière plastique diffèrent quant à leur composition chimique et présentent des teneurs différentes en fibres de renforcement.

15. Procédé de fabrication selon l'une des revendications 12 à 14, dans lequel au moins le disque d'insert (10) est transparent ou du moins susceptible d'être traversé par une lumière après la fabrication à partir du premier composant et/ou dans lequel le moule d'injection définit un disque d'insert (10), lequel présente deux côtés de fixation (12, 14) disposés de façon opposée l'un par rapport à l'autre, avec plusieurs ouvertures de passage (16, 18) disposées de façon excentrée autour de l'arbre (40), lesquelles relient les côtés de fixation (12, 14) entre eux et parmi lesquelles au moins une ouverture de passage (16, 18) présente une saillie de bordure complètement périphérique ou partiellement périphérique, laquelle est conçue comme une denture (22, 24) et s'étend unilatéralement ou bilatéralement au-delà du côté de fixation (12, 14) respectif du disque d'insert (10).

16. Procédé de fabrication d'un insert de fixation (1) en forme de T selon l'une des revendications précédentes 1 à 9, lequel présente les étapes suivantes :
a. mise à disposition (A1) d'un disque d'insert (10) de l'insert de fixation (1) en matière plastique, de préférence une matière plastique transparente ou du moins susceptible d'être traversée par une lumière, lequel présente deux côtés de fixation (12, 14) disposés de façon opposée l'un par rapport à l'autre, avec plusieurs ouvertures de passage (16, 18) disposées de façon excentrée autour de l'arbre (40), lesquelles relient les côtés de fixation (12, 14) entre eux et parmi lesquelles au moins une ouverture de passage (16, 18) présente une saillie de bordure complètement périphérique ou partiellement périphérique, laquelle est conçue comme une denture (22, 24) et s'étend unilatéralement ou bilatéralement au-delà du côté de fixation (12, 14) respectif du disque d'insert (10),
b. mise à disposition d'un arbre (40) de l'insert de fixation (1) (A2),
c. assemblage du disque d'insert (10) et de l'arbre (40) de manière imperdable pour former un insert de fixation (1) en forme de T (A3 ; A4 ; A5 ; A6).

17. Procédé de fabrication selon la revendication 16, dans lequel le disque d'insert (10) et l'arbre (40) sont assemblés par :
i. serrage mécanique (A3) ou encliquetage (A4) de l'arbre (40) dans une ouverture centrale du disque d'insert (10) ou
ii. assemblage thermique (A5) de l'arbre (40) et du disque d'insert (10), de préférence par soudage aux ultrasons ou par soudage par friction, ou
iii. collage (A6) de l'arbre (40) et du disque d'insert (10).

18. Procédé de fabrication pour un composant constitué d'un matériau composite avec un insert de fixation (1) en forme de T selon l'une des revendications 1 à 7, lequel présente un disque d'insert (10) et un arbre (40) fixé à celui-ci, comportant les étapes suivantes :
I. mise à disposition (H1) d'un moule de composant avec au moins une première couche de matériau, de préférence une première couche de fibres, le moule de composant définissant une forme complémentaire d'un composant à fabriquer,
II. positionnement et fixation préalable de l'insert de fixation (1) sur l'au moins une première couche de matériau, la fixation préalable étant réalisée par fabrication d'un assemblage par adhérence et/ou par complémentarité de forme entre un premier côté de fixation (12, 14) du disque d'insert (10) tourné vers la première couche de matériau et la première couche de matériau (H2, H3),
III. après l'étape II, enrobage de l'assemblage composé de l'insert de fixation (1) et de la première couche de matériau dans une matière plastique renforcée par des fibres ou dans un matériau en mousse (H6).

19. Procédé de fabrication selon la revendication 18, comprenant l'étape supplémentaire suivante :
IV. disposition d'au moins une deuxième couche de matériau, de préférence d'une deuxième couche de fibres, sur une deuxième couche de fixation tournée vers la deuxième couche de matériau, de manière à ce que la deuxième couche de matériau entoure l'arbre (40) de l'insert de fixation (H4), ou
V. imprégnation de la pile composée de la première et de la deuxième couche de matériau, avec l'insert de fixation (1) placé entre celles-ci, avec une matière résineuse liquide, et durcissement de manière à obtenir un composant constitué d'un matériau composite multicouche (H6).

20. Procédé de fabrication selon la revendication 18 ou 19, dans lequel la fixation préalable est réalisée par un assemblage par complémentarité de forme à l'aide d'une denture (22, 24) sur le premier côté de fixation (12, 14) du disque d'insert (10), laquelle s'introduit au moins dans la première couche de matériau et s'accroche dans celle-ci (H2), et/ou dans lequel la fixation préalable est réalisée par un assemblage par adhérence à l'aide d'une colle d'assemblage entre le premier côté de fixation (12, 14) du disque d'insert (10) et la première couche de matériau, laquelle est durcie sous l'action de la lumière et/ou de la chaleur (H3).

21. Procédé de fabrication selon la revendication 20, deuxième alternative, comprenant l'étape supplémentaire suivante : application d'une colle dans une cavité concave du premier côté de fixation (12, 14) et durcissement de la colle par rayonnement de lumière après le positionnement sur la première couche de matériau, par irradiation du disque d'insert (10) constitué d'un matériau transparent ou susceptible d'être traversé par une lumière.

22. Procédé de fabrication selon l'une des revendications 19 à 21, comprenant l'étape supplémentaire suivante : fixation du deuxième côté de fixation (14, 12) du disque d'insert (10) au moins à l'aide d'un assemblage par complémentarité de forme à la deuxième couche de matériau, par introduction d'une denture (24, 22) sur le deuxième côté de fixation (14, 12) du disque d'insert (10) au moins dans la deuxième couche de matériau.

23. Procédé de fabrication selon l'une des revendications 18 à 20, première alternative, ou 21 à 22, comprenant l'étape supplémentaire suivante : couture de l'insert de fixation (1) à l'au moins une première couche de matériau.

24. Procédé de fabrication selon l'une des revendications 18 à 23, dans lequel le composant est fabriqué au cours d'un procédé de moulage par transfert de résine (RTM) ou par pression à froid ou par pression à chaud.
